# EUROPEAN PATENT APPLICATION

(11) **EP 4 808 263 A1**
(43) Date of publication of application: **16.09.2026**
(21) Application number: 24895780.5
(22) Date of filing: 19.08.2024
(51) Int. Cl.: H04W 76/15

(54) **COMMUNICATION CONNECTION METHOD AND APPARATUS**

(30) Priority: 29.11.2023 CN 202311622112
(71) Applicant: Huawei Technologies Co., Ltd., Shenzhen, Guangdong 518129 (CN)
(72) Inventor: XU, Shengfeng, Shenzhen, Guangdong 518129 (CN); PENG, Wenjie, Shenzhen, Guangdong 518129 (CN); XU, Yishan, Shenzhen, Guangdong 518129 (CN)
(74) Representative: Körber, Martin Hans
(86) International application number: PCT/CN2024/112976
(87) International publication number: WO 2025/112679

(57) **Abstract**

Embodiments of this application provide a communication connection method and apparatus, to implement that one terminal establishes connections to a plurality of access network devices at the same time, to improve communication connection reliability of the terminal device. In this application, the access and mobility management device obtains the radio capability of the terminal and the first radio capability of the terminal, where the first radio capability of the terminal is a subset of the radio capability of the terminal, and the terminal is connected to the access and mobility management function device via the first access network device. After obtaining the operation mode information of the terminal, the access and mobility management function device sends the radio capability of the terminal or the first radio capability of the terminal to the first access network device based on the operation mode information of the terminal. So that the first access network device performs air interface configuration with the terminal based on the first radio capability of the terminal or the radio capability of the terminal. This avoids a case in which an air interface resource cannot be properly configured when the terminal is connected to multiple access network devices at the same time, and improves communication connection reliability of the terminal.

## Description

This application claims priority to Chinese Patent Application No. 202311622112.6, filed with the China National Intellectual Property Administration on November 29, 2023, and entitled "A METHOD AND APPARATUS FOR ESTABLISHING A COMMUNICATION CONNECTION", which is incorporated herein by reference in its entirety.

### TECHNICAL FIELD

This application relates to the field of wireless communications, and in particular, to a method and an apparatus for establishing a communication connection.

### BACKGROUND

In wireless communication technology, when a terminal accesses a network, the terminal needs to report the terminal capability information to the network. The network can configure the terminal based on the terminal capability information and coordinate the signaling message transmission mode between the terminal and the base station. For example, the terminal reports its terminal radio capability (UE Radio Capability) information to the access and mobility management function (access and mobility management function, AMF). Since the terminal radio capability information has a large capacity, and every time the terminal switches from an idle state to a connected state, the terminal radio capability information needs to be used. To reduce the repeated transmission costs of the terminal radio capability information, after obtaining the terminal radio capability information of the terminal, the AMF stores the terminal radio capability information. When the terminal changes from the idle state to the connected state, the terminal connects to the AMF via a radio access network (radio access network, RAN). The AMF sends the radio capability information of the terminal to the RAN, and the RAN performs proper configuration of air interface resources for the terminal by using the radio capability information of the terminal, thereby implementing a radio connection between the terminal and the RAN.

In a scenario where a terminal simultaneously connects to two RANs, the terminal establishes wireless connections with both RANs. The radio capability of the terminal is shared and used by the two RANs. How the two RANs properly configure the air interface resources of the terminal is an urgent problem to be solved.

### SUMMARY

Embodiments of this application provide a method and an apparatus for establishing a communication connection, to implement a scenario in which a terminal simultaneously establishes connections with multiple RAN devices, thereby improving the reliability of the communication connection of the terminal device.

An aspect of this application provides a method for establishing a communication connection, comprising:
The preset AMF obtains the radio capability of a preset UE and the first radio capability of the preset UE. The first radio capability of the preset UE is a subset of the radio capability of the preset UE. The preset UE is connected to the preset AMF via the first RAN.

The preset AMF obtains the operation mode information of the preset UE. The operation mode information of the preset UE indicates the quantity of RANs connected to the preset UE.

Based on the operation mode information of the preset UE, the preset AMF sends, to the first RAN, the radio capability of the preset UE or the first radio capability of the preset UE, so that the first RAN performs air interface configuration with the preset UE based on the first radio capability of the preset UE or the radio capability of the preset UE.

In the embodiments of this application, by obtaining, through the AMF, the radio capability of the terminal and the first radio capability of the terminal, the first radio capability of the terminal is a subset of the radio capability of the terminal. The terminal may connect to the AMF via the first RAN. After obtaining the operation mode information of the terminal, the AMF sends, to the first RAN based on the quantity of RANs connected to the terminal that is indicated by the operation mode information of the terminal, the radio capability of the terminal or the first radio capability of the terminal, so that the first RAN performs air interface configuration with the terminal based on the first radio capability of the terminal or the radio capability of the terminal. This avoids a situation in which, when the terminal is simultaneously connected to multiple RANs, air interface resources cannot be properly configured. This provides a possibility for the terminal to simultaneously connect to multiple RANs for data transmission, and improves communication connection reliability of the terminal.

In a possible implementation of the first aspect, the sending, by the preset AMF, the radio capability of the preset UE or the first radio capability of the preset UE to a first RAN based on the operation mode information of the preset UE includes:
when the operation mode information indicates that the preset UE is connected to two RANs, sending, by the preset AMF, the first radio capability of the preset UE to the first RAN based on the operation mode information; and
When the operation mode information indicates that the preset UE is connected to one RAN, the preset AMF sends the radio capability of the preset UE to the first RAN based on the operation mode information.

In this embodiment of this application, when the operation mode information indicates that the preset UE is connected to two RANs, the preset AMF sends the first radio capability of the preset UE to the first RAN. When the operation mode information indicates that the preset UE is connected to one RAN, sending, by the preset AMF, the radio capability of the preset UE to the first RAN, and flexibly sending different radio capabilities to the first RAN according to different numbers of RANs that the preset UE is connected to. In this way, the first RAN can properly perform air interface configuration with the preset UE based on the radio capability, thereby improving flexibility and implementability of the solution.

In a possible implementation of the first aspect, the operation mode information comprises single connectivity mode information or dual connectivity mode information. The single connectivity mode information indicates that the preset UE is connected to one RAN, and the dual connectivity mode information indicates that the preset UE is connected to two RANs.

In the embodiments of this application, the preset AMF obtains operation mode information of the preset UE.

In the embodiments of this application, the preset AMF obtains single connectivity mode information or dual connectivity mode information sent by the preset UE.

In the embodiments of this application, the preset AMF determines, based on the single connectivity mode information and the dual connectivity mode information, the number of RANs that the preset UE is connected to. Further, based on the quantity of RANs connected to the preset UE, the preset AMF determines a processing manner of a radio capability. This helps accurately allocate an accurate radio capability to the RAN based on an actual connection status of the preset UE. This implements flexible switching between a single-RAN connection and a multi-RAN connection of the preset UE, thereby improving flexibility of the solution while ensuring accuracy of the solution.

In a possible implementation of the first aspect, the first radio capability of the preset UE is a radio capability set generated by the first device based on the radio capability of the preset UE. The first device is the preset AMF, the preset UE, or the first RAN.

In this embodiment of this application, the first radio capability of the preset UE may be a radio capability generated by the preset AMF, the preset UE, or the first RAN. A plurality of nodes may generate the first radio capability of the preset UE, thereby improving flexibility of solution implementation.

In a possible implementation of the first aspect, the method further includes:
obtaining, by a preset AMF, a second radio capability of preset UE, where the second radio capability of the preset UE is a subset of the radio capability of the preset UE, and the preset UE is connected to the preset AMF by using a second RAN; and
When the operation mode information indicates that the preset UE is connected to two RANs, the preset AMF further sends the second radio capability of the preset UE to the second RAN, so that the second RAN performs air interface configuration with the preset UE based on the second radio capability of the preset UE.

In this embodiment of this application, when the preset UE is connected to two RANs, and the preset AMF manages connections between the two RANs and the preset UE at the same time, the preset AMF further obtains the second radio capability of the preset UE, and sends the second radio capability of the preset UE to the second RAN. so that the second RAN performs air interface configuration with the preset UE according to the second radio capability of the preset UE, where the preset UE is connected to the preset AMF via the second RAN, so that the preset AMF manages connections between two RANs and the preset UE at the same time, a radio capability transmission and configuration related to the second RAN improves solution integrity.

In a possible implementation of the first aspect, the obtaining, by a preset AMF, operation mode information of preset UE includes:
When the preset UE is separately connected to the preset AMF via the first RAN and the second RAN, the AMF generates the operation mode information of the preset UE, where the operation mode information of the preset UE indicates that the preset UE is connected to the two RANs.

In this embodiment of this application, a manner in which the preset AMF obtains the operation mode information of the preset UE includes: the AMF generates the operation mode information of the preset UE based on the connection status between the preset UE and the RAN. The operation mode information of the preset UE may be obtained in a plurality of manners. This improves the flexibility of solution implementation.

In a possible implementation of the first aspect, the first radio capability of the preset UE is a radio capability used by the preset UE to connect to a RAN of the first radio access technology (RAT) type, and the RAT type of the first RAN is the first RAT type.

In this embodiment of this application, the first radio capability of the preset UE is the radio capability used when the preset UE is connected to the RAN of the first RAT type, and the preset UE uses the first radio capability of the preset UE when connecting to the first RAN. In other words, the RAT type of the first RAN is the first RAT type, and the radio capability of the preset UE is stored and used based on the RAT type of the RAN. This can make full use of similar air interface resources of RANs of a same RAT type, and reduce radio capability types that need to be stored by the preset AMF. Storage space occupied by the preset AMF is reduced.

In a possible implementation of the first aspect, the second radio capability of the preset UE is the radio capability used when the preset UE connects to a RAN of the second RAT type. The RAT type of the second RAN is the second RAT type.

The second aspect of this application provides a communication connection method, including:
The preset UE generates the first radio capability and the second radio capability of the preset UE. The first radio capability of the preset UE is a subset of the radio capability of the preset UE. The second radio capability of the preset UE is a subset of the radio capability of the preset UE.

The preset UE processes the first radio capability and the second radio capability of the preset UE, so that when the preset UE connects to the first RAN and the preset UE connects to the second RAN, the first RAN performs air interface configuration with the preset UE based on the first radio capability of the preset UE, and the second RAN performs air interface configuration with the preset UE based on the second radio capability of the preset UE.

In a possible implementation of the second aspect, the method further includes:
obtaining, by the preset UE, a radio capability of the preset UE, a radio capability of the first RAN, and a radio capability of the second RAN; and
the generating, by the preset UE, a first radio capability of the preset UE and a second radio capability of the preset UE includes:
   The preset UE generates the first radio capability of the preset UE and the second radio capability of the preset UE according to the radio capability of the preset UE, the radio capability of the first RAN, and the radio capability of the second RAN.

In a possible implementation of the second aspect, the processing, by the preset UE, a first radio capability of the preset UE and a second radio capability of the preset UE includes:
The preset UE sends the first radio capability of the preset UE to the first AMF. The first AMF is responsible for access management of the preset UE.

The preset UE sends the second radio capability of the preset UE to the second AMF. The second AMF is responsible for access management of the preset UE.

In a possible implementation of the second aspect, the processing, by the preset UE, of the first radio capability of the preset UE and the second radio capability of the preset UE includes:
The preset UE sends the first radio capability of the preset UE and the second radio capability of the preset UE to the preset AMF. The preset AMF is responsible for access management of the preset UE.

In a possible implementation of the second aspect, the method further includes:
The preset UE sends the single connectivity mode information or the dual connectivity mode information to the preset AMF, where the single connectivity mode information indicates that the preset UE is connected to one RAN, and the dual connectivity mode information indicates that the preset UE is connected to two RANs.

In a possible implementation of the second aspect, the first radio capability of the preset UE is a radio capability used by the preset UE to connect to a RAN of the RAT type of the first radio access technology; and the second radio capability of the preset UE is the radio capability used when the preset UE is connected to the RAN of the second RAT type.

The third aspect of this application provides a communication connection method, including:
generating, by the first RAN, a first radio capability of the preset UE and a second radio capability of the preset UE, where the first radio capability of the preset UE is a subset of the radio capability of the preset UE, and the second radio capability of the preset UE is a subset of the radio capability of the preset UE; and
When the first RAN processes the first radio capability of the preset UE and the second radio capability of the preset UE, so that the preset UE is connected to the first RAN and the preset UE is connected to the second RAN, The first RAN performs air interface configuration with the preset UE according to the first radio capability of the preset UE, and the second RAN performs air interface configuration with the preset UE according to the second radio capability of the preset UE.

In a possible implementation of the third aspect, the method further includes:
The first RAN obtains the radio capability of the preset UE, the radio capability of the first RAN, and the radio capability of the second RAN.

The first RAN generates the first radio capability of the preset UE and the second radio capability of the preset UE, including:
The first RAN generates the first radio capability of the preset UE and the second radio capability of the preset UE, based on the radio capability of the preset UE, the radio capability of the first RAN, and the radio capability of the second RAN.

In a possible implementation of the third aspect, the first RAN processes the first radio capability of the preset UE and the second radio capability of the preset UE, including:
The first RAN performs air interface configuration with the preset UE based on the first radio capability of the preset UE.

The first RAN sends the second radio capability of the preset UE to the second RAN, so that the second RAN performs air interface configuration with the preset UE based on the second radio capability of the preset UE.

In a possible implementation of the third aspect, the first radio capability of the preset UE is a radio capability used when the preset UE is connected to a RAN of a first radio access technology RAT type, and the second radio capability of the preset UE is a radio capability used when the preset UE is connected to a RAN of a second RAT type.

The fourth aspect of this application provides a communication connection apparatus, including:
an obtaining unit, configured to obtain a radio capability of a preset UE and a first radio capability of the preset UE, wherein the first radio capability of the preset UE is a subset of the radio capability of the preset UE, and the preset UE is connected to a preset AMF through a first RAN;
the obtaining unit is further configured to obtain operation mode information of the preset UE, where the operation mode information of the preset UE indicates the number of RANs that the preset UE is connected to; and
a sending unit, configured to send the radio capability of the preset UE or the first radio capability of the preset UE to the first RAN according to the operation mode information of the preset UE, so that the first RAN performs air interface configuration with the preset UE based on the first radio capability or the radio capability of the preset UE.

In a possible implementation of the fourth aspect, the sending unit is specifically configured to:
when the operation mode information indicates that the preset UE is connected to two RANs, sending the first radio capability of the preset UE to the first RAN according to the operation mode information; and
when the operation mode information indicates that the preset UE is connected to one RAN, sending the radio capability of the preset UE to the first RAN according to the operation mode information.

In a possible implementation of the fourth aspect, the operation mode information comprises single connectivity mode information or dual connectivity mode information, the single connectivity mode information indicates that the preset UE is connected to one RAN, and the dual connectivity mode information indicates that the preset UE is connected to two RANs; and
the obtaining unit is specifically configured to obtain the single connectivity mode information or the dual connectivity mode information sent by the preset UE.

In a possible implementation of the fourth aspect, the first radio capability of the preset UE is a radio capability set generated by the first device based on the radio capability of the preset UE, and the first device is the preset AMF, preset UE, or a first RAN.

In a possible implementation of the fourth aspect, the obtaining unit is further configured to obtain a second radio capability of the preset UE, where the second radio capability of the preset UE is a subset of the radio capability of the preset UE, and the preset UE is connected to the preset AMF via the second RAN; and
When the operation mode information indicates that the preset UE is connected to two RANs, the sending unit is further configured to send the second radio capability of the preset UE to the second RAN, so that the second RAN performs air interface configuration with the preset UE according to the second radio capability of the preset UE.

In a possible implementation of the fourth aspect, the obtaining unit is specifically configured to: when the preset UE is connected to the preset AMF via the first RAN and the second RAN respectively, generate operation mode information of the preset UE, wherein the operation mode information of the preset UE indicates that the preset UE is connected to two RANs.

In a possible implementation of the fourth aspect, the first radio capability of the preset UE is a radio capability used when the preset UE is connected to a RAN of a first radio access technology (RAT) type, and the RAT type of the first RAN is the first RAT type.

In a possible implementation of the fourth aspect, the second radio capability of the preset UE is a radio capability used when the preset UE is connected to a RAN of a second radio access technology (RAT) type, and the RAT type of the second RAN is the second RAT type.

The fifth aspect of this application provides a communication connection apparatus, including:
a generation unit, configured to generate a first radio capability of the preset UE and a second radio capability of the preset UE, wherein the first radio capability of the preset UE is a subset of the radio capability of the preset UE, and the second radio capability of the preset UE is a subset of the radio capability of the preset UE.

A processing unit, configured to process the first radio capability of a preset UE and the second radio capability of the preset UE, so that when the preset UE is connected to a first RAN and the preset UE is connected to a second RAN, the first RAN performs air interface configuration with the preset UE based on the first radio capability of the preset UE, and the second RAN performs air interface configuration with the preset UE based on the second radio capability of the preset UE.

In a possible implementation of the fifth aspect, the apparatus further includes an obtaining unit, configured to obtain the radio capability of the preset UE, the radio capability of the first RAN, and the radio capability of the second RAN.

A generation unit, specifically configured to generate the first radio capability of the preset UE and the second radio capability of the preset UE based on the radio capability of the preset UE, the radio capability of the first RAN, and the radio capability of the second RAN.

In a possible implementation of the fifth aspect, the processing unit is specifically configured to:
send the first radio capability of the preset UE to a first AMF, where the first AMF is responsible for access management of the preset UE;
send the second radio capability of the preset UE to a second AMF, where the second AMF is responsible for access management of the preset UE.

In a possible implementation of the fifth aspect, the processing unit is specifically configured to send the first radio capability of the preset UE and the second radio capability of the preset UE to a preset AMF, where the preset AMF is responsible for access management of the preset UE.

In a possible implementation of the fifth aspect, the apparatus further includes a sending unit, configured to send single connectivity mode information or dual connectivity mode information to a preset AMF. The single connectivity mode information indicates that the preset UE is connected to one RAN, and the dual connectivity mode information indicates that the preset UE is connected to two RANs.

In a possible implementation of the fifth aspect, the first radio capability of the preset UE is a radio capability used when the preset UE is connected to a RAN of a first radio access technology (RAT) type, and the second radio capability of the preset UE is a radio capability used when the preset UE is connected to a RAN of a second RAT type.

The sixth aspect of this application provides a communication connection apparatus, including:
a generation unit, configured to generate a first radio capability of the preset UE and a second radio capability of the preset UE, where the first radio capability of the preset UE is a subset of the radio capability of the preset UE; and the second radio capability of the preset UE is a subset of the radio capability of the preset UE; and
a processing unit, configured to process the first radio capability of the preset UE and the second radio capability of the preset UE, so that when the preset UE is connected to the first RAN and the preset UE is connected to the second RAN, The first RAN performs air interface configuration with the preset UE according to the first radio capability of the preset UE, and the second RAN performs air interface configuration with the preset UE according to the second radio capability of the preset UE.

In a possible implementation of the sixth aspect, the apparatus further includes an obtaining unit, configured to obtain a radio capability of the preset UE, a radio capability of the first RAN, and a radio capability of the second RAN; and
a generation unit, configured to generate the first radio capability of the preset UE and the second radio capability of the preset UE according to the radio capability of the preset UE, the radio capability of the first RAN, and the radio capability of the second RAN.

In a possible implementation of the sixth aspect, the processing unit is specifically configured to:
perform air interface configuration with the preset UE based on the first radio capability of the preset UE; and
send the second radio capability of the preset UE to a second RAN, so that the second RAN performs air interface configuration with the preset UE based on the second radio capability of the preset UE.

In a possible implementation of the sixth aspect, the first radio capability of the preset UE is a radio capability used when the preset UE is connected to a RAN of a first radio access technology (RAT). The second radio capability of the preset UE is a radio capability used when the preset UE is connected to a RAN of a second RAT.

The seventh aspect of this application provides a communication connection apparatus, including a processor and a memory. The processor is coupled to the memory. The memory is configured to store a program.

The processor is configured to execute a program in the memory, so that the method according to the first aspect or a possible implementation of the first aspect is performed.

The eighth aspect of this application provides a communication connection apparatus, including a processor and a memory. The processor is coupled to the memory. The memory is configured to store a program.

The processor is configured to execute a program in the memory, so that the method according to the second aspect or a possible implementation of the second aspect is performed.

The ninth aspect of this application provides a communication connection apparatus, including a processor and a memory. The processor is coupled to the memory. The memory is configured to store a program.

The processor is configured to execute a program in the memory, so that the method according to the third aspect or a possible implementation of the third aspect is performed.

The tenth aspect of this application provides a computer-readable storage medium, including a program. When the program runs on a computer, the computer is enabled to perform the method according to the first aspect or a possible implementation of the first aspect.

The eleventh aspect of this application provides a computer-readable storage medium, including a program. When the program runs on a computer, the computer is enabled to perform the method according to the second aspect or a possible implementation of the second aspect.

The twelfth aspect of this application provides a computer-readable storage medium, including a program. When the program runs on a computer, the computer is enabled to perform the method according to the third aspect or a possible implementation of the third aspect.

The thirteenth aspect of this application provides a computer program product including instructions. When the computer program product runs on a computer, the computer is enabled to perform the method according to the foregoing implementation manners.

### BRIEF DESCRIPTION OF DRAWINGS

FIG. 1 is a schematic diagram of an architecture of a 5G communications system according to an embodiment of this application;
FIG. 2a is a schematic diagram of a network structure according to an embodiment of this application;
FIG. 2b is a schematic flowchart of a method for establishing a communication connection according to an embodiment of this application;
FIG. 3a is another schematic diagram of a network structure according to an embodiment of this application;
FIG. 3b is another schematic flowchart of a method for establishing a communication connection according to an embodiment of this application.
FIG. 4a is another schematic diagram of a network structure according to an embodiment of this application;
FIG. 4b is another schematic flowchart of a method for establishing a communication connection according to an embodiment of this application;
FIG. 5a is another schematic diagram of a network structure according to an embodiment of this application;
FIG. 5b is another schematic flowchart of a method for establishing a communication connection according to an embodiment of this application;
FIG. 6 is a schematic structural diagram of a communication connection apparatus according to an embodiment of this application.
FIG. 7 is another schematic structural diagram of a communication connection apparatus according to an embodiment of this application;
FIG. 8 is another schematic structural diagram of a communication connection apparatus according to an embodiment of this application;
FIG. 9 is another schematic structural diagram of a communication connection apparatus according to an embodiment of this application;
FIG. 10 is another schematic structural diagram of a communication connection apparatus according to an embodiment of this application;
FIG. 11 is another schematic structural diagram of a communication connection apparatus according to an embodiment of this application.

### DESCRIPTION OF EMBODIMENTS

The embodiments of this application provide a method and an apparatus for establishing a communication connection, which are used to implement a scenario in which a terminal simultaneously establishes connections with multiple RAN devices, thereby improving the reliability of the communication connection of the terminal.

The terms "first," "second," "third," "fourth," and so on (if present) in the specification, claims, and the accompanying drawings of this application are used to distinguish similar objects, and do not necessarily need to describe a specific order or sequence. It should be understood that such data, when appropriately used, can be interchangeable, so that the embodiments of this application described herein, for example, can be implemented in a sequence other than the sequence illustrated or described herein. Additionally, the terms "include" and "correspond to," as well as any variations of these terms, are intended to cover non-exclusive inclusion. For example, a process, method, system, product, or device that includes a series of steps or units does not need to be limited to the clearly listed steps or units, but may include other steps or units that are not clearly listed or that are inherent to these processes, methods, products, or devices.

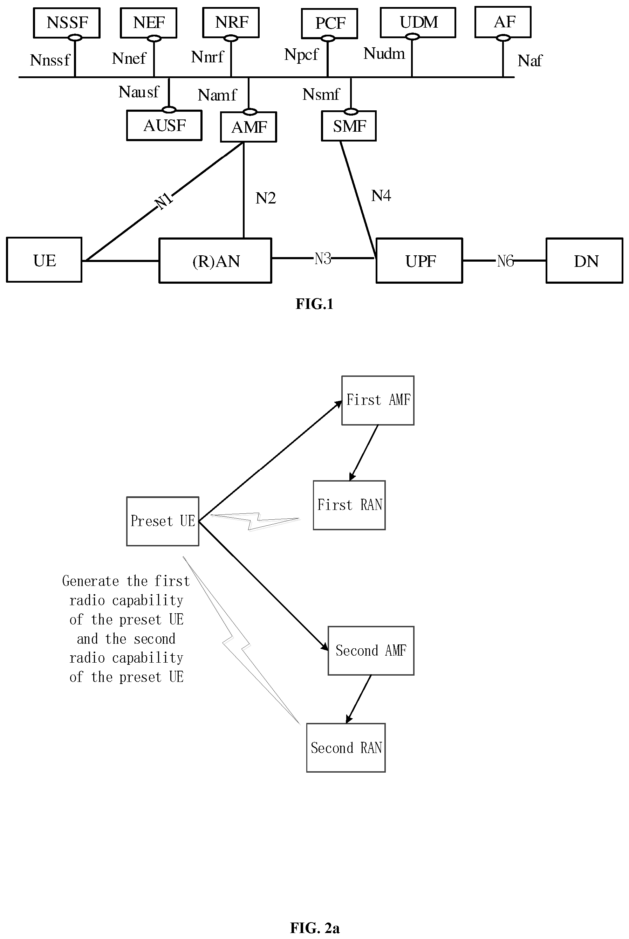

To facilitate understanding of the technical solutions provided in the embodiments of this application, this section first provides a brief introduction to some communication system architectures related to the embodiments of this application:
Please refer to FIG. 1, which shows the architecture of a 5G communication system according to an embodiment of this application.

The 5G system architecture is shown in FIG. 1, and the network functions and entities included in the 5G system architecture are mainly: user equipment (user equipment, UE), a radio access network (radio access network, RAN), a user plane function (user plane function, UPF), a destination network (destination network, DN), an AMF, a session management function (session management function, SMF), a policy control function (policy control function, PCF), an application function (application function, AF), a network slice selection function (network slice selection function, NSSF), an authentication server function (authentication server function, AUSF), a network exposure function (network exposure function, NEF), and a unified data management (unified data management, UDM)).

Among them, the UE, RAN, UPF, and DN are network function entities on the data plane. A user's data traffic can be transmitted through a protocol data unit (protocol data unit session, PDU) session established between the UE and the DN. During the data transmission process, the data will pass through two network function entities: the RAN and the UPF. Other parts are referred to as network function entities and functions on the control plane, which are primarily responsible for functions such as authentication and authorization, registration management, session management, mobility management, and policy control. These functions ensure the reliable and stable transmission of user traffic at the user layer.

Terminal device: It can be a UE, a handheld terminal, a notebook computer, a cellular phone, a smart phone, a tablet computer, a handheld device, an AR device, a VR device, a machine type communication terminal, or any other device capable of accessing a network. The terminal device communicates with the access network device using a certain air interface technology (such as NR or LTE technology). The terminal device can also communicate with another terminal device using a certain air interface technology (such as NR or LTE technology)). In vehicle-to-everything (V2X) communication, the communication terminal carried on a vehicle is a type of terminal device, and a road side unit (road side unit, RSU) can also serve as a type of terminal device. The communication terminal carried on an unmanned aerial vehicle (UAV) can be considered as a type of terminal device.

RAN equipment: Primarily responsible for radio resource management, service quality management, data compression, and encryption on the air interface side. The access network equipment may include various forms of base stations, such as macro base stations, micro base stations, relay stations, access points, etc. In systems employing different radio access technologies, the names of devices with base station functions may vary. For example, in a 5th generation (5th generation, 5G) system, it is referred to as a gNB. Under the service-oriented architecture of the access network, the RAN equipment may also be replaced by an access network function (access network function, ANF) network element.

AMF network element: Belongs to the core network network element and is primarily responsible for the signaling processing part, such as: access control, mobility management, attach and detach, and gateway selection functions. When the AMF network element provides services for sessions in terminal devices, it will provide control plane storage resources for the session to store session identifiers, SMF network element identifiers associated with the session identifiers, and the like.

UPF network element: Responsible for forwarding and receiving user data in terminal devices. It can receive user data from the data network and transmit it to the terminal device through access network devices. The UPF network element can also receive user data from the terminal device through access network devices and forward it to the data network. The transmission resources and scheduling functions within the UPF network element that provide services for terminal devices are managed and controlled by the SMF network element.

NEF network element: Primarily supports the interaction between 3GPP networks and the security of third-party applications.

AF network element: Primarily supports interaction with the 3GPP core network to provide services, such as influencing data routing decisions, policy control functions, or providing third-party services to the network side.

PCF network element: Responsible for making decisions on policy control, providing policy rules for control plane functions, and implementing traffic-based charging control functions.

NSSF network element: Primarily responsible for network slice selection, determining the network slice instances that a UE is allowed to access based on the slice selection assistance information of the UE, subscription information, etc.

UDM network element: Primarily responsible for managing subscription data of UEs, including the storage and management of UE identifiers, UE access authorization, etc.

AUSF network element: Supports access authentication for both 3GPP and non-3GPP networks.

Network Repository Function (NRF) network element: Supports the registration and discovery of network functions.

Unified Data Repository (UDR) network element: Stores and retrieves subscription data used by UDM and PCF.

Network Data Analytics Function (NWDAF) network element: Supports the collection of data from other network functions and AFs; supports the collection of data from OAM; and supports the provision of analytical information to other network functions and AFs.

When the UE is connected to two RANs at the same time, the AMF sends the UE Radio Capability to the two RANs, and the two RANs perform radio capability configuration with the terminal based on the UE Radio Capability. Because the two RANs simultaneously configure the UE Radio Capability of the terminal, as a result, the configuration fails. How to solve this configuration problem, and how to implement simultaneous connection between the UE and two RANs, thereby improving communication connection reliability of the UE, becomes an urgent problem to be solved.

For the foregoing objective, it is proposed in this application that the radio capability of the preset UE and the second radio capability of the preset UE may be obtained via the preset AMF, where the first radio capability of the preset UE is a subset of the radio capability of the preset UE. The preset UE may be connected to the preset AMF via the first RAN, and the preset AMF obtains the operation mode information of the preset UE where the number of RANs the the preset UE is connected to. The radio capability of the preset UE or the first radio capability of the preset UE is selected to be sent to the first RAN according to the number of RANs that the preset US is connected to, so that the first RAN can perform air interface configuration with the preset UE based on the radio capability or the first radio capability of the preset UE. When the UE is connected to different numbers of RANs, different air interface configurations are performed on the UE by using different air interface resources, so that the UE is connected to a plurality of RANs simultaneously and communicates with each other, thereby improving communication connection reliability of the UE.

Since there are various different application scenarios in the connection between the UE and the AMF via the RAN, this application will describe the solutions proposed in this application in combination with different application scenarios. For example, when the UE is connected to the first AMF via the first RAN, the UE is simultaneously connected to the second AMF via the second RAN. Alternatively, when the UE is connected to the third AMF via the first RAN, the UE is simultaneously connected to the third AMF via the second RAN.

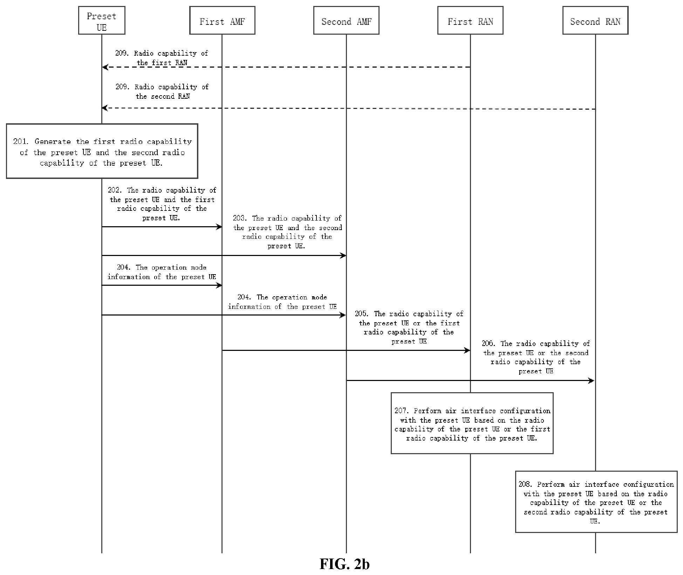

First, with reference to FIG. 2a and FIG. 2b, a scenario in which the UE is connected to the first AMF via the first RAN, and the UE is simultaneously connected to the second AMF via the second RAN, is described to introduce the solutions proposed in this application:
As can be seen from FIG. 2a, the preset UE is connected to the first AMF via the first RAN, and the preset UE is simultaneously connected to the second AMF via the second RAN.

The following describes the solutions proposed in this application with reference to FIG. 2b:
201. The preset UE generates the first radio capability of the preset UE and the second radio capability of the preset UE;
The preset UE generates the first radio capability (partial radio capability info 1) and the second radio capability (partial radio capability info 2) of the preset UE. Herein, the first radio capability of the preset UE is a subset of the radio capability of the preset UE, and the second radio capability of the preset UE is a subset of the radio capability of the preset UE.

Optionally, the preset UE generates the first radio capability and the second radio capability of the preset UE based on the radio capability of the preset UE. The radio capability of the preset UE may be information about a radio access technology supported by the preset UE (for example, a power level, a frequency band, and the number of MIMO layers). For example, if the radio capability of the preset UE is a frequency band f1 and a frequency band f2, the first radio capability of the preset UE is a frequency band f1, and the first radio capability of the preset UE is a frequency band f2.

Optionally, the first RAN supports the first radio capability of the preset UE, and the second RAN supports the second radio capability of the preset UE. That is, the first radio capability of the preset UE is also a subset of the radio capability of the first RAN, and the second radio capability of the preset UE is also a subset of the radio capability of the second RAN.

In addition, the radio capability of the preset UE comprises all radio capabilities supported by the preset UE, and the first radio capability of the preset UE and the second radio capability of the prest UE are partial radio capabilities of the preset UE. In addition, there is an association relationship between the first radio capability of the preset UE and the RAT of the RAN connected to the preset UE, and there is an association relationship between the second radio capability of the preset UE and the RAT connected to the preset UE.

For example, the first radio capability of the preset UE is the radio capability used when the preset UE is connected to a RAN of the first RAT type, and the RAT type of the first RAN is the first RAT type. The second radio capability of the preset UE is the radio capability used when the preset UE is connected to the RAN of the second RAT type, and the RAT type of the second RAN is the second RAT type. For example, the first RAT type may be a 5G RAT type, and the second RAT type may be a 6G RAT type. This is not limited herein.

In this embodiment of this application, the first radio capability of the preset UE is the radio capability used when the preset UE is connected to the RAN of the first RAT type, and the preset UE uses the first radio capability of the preset UE when connecting to the first RAN. In other words, the RAT type of the first RAN is the first RAT type. By storing and using the radio capability of the preset UE according to the RAT type of the RAN, similar air interface resources of RANs of the same RAT type can be fully utilized, reducing the number of radio capability types that need to be stored by the preset AMF and the storage space occupied by the preset AMF.

It may be understood that, herein, descriptions about generating, by the preset UE, the first radio capability of the preset UE and the second radio capability of the preset UE, as well as the descriptions about the first RAT type and the second RAT type are merely examples. In actual application, setting should be made with reference to a specific application scenario. There is no limitation herein.

202. The preset UE sends the radio capability of the preset UE and the first radio capability of the preset UE to the first AMF.

After the preset UE generates the first radio capability and the second radio capability of the preset UE, the preset UE sends the radio capability (full radio capability) of the preset UE and the first radio capability (partial radio capability info 1) of the preset UE to the first AMF. The preset UE is connected to the first AMF via the first RAN.

When the UE accesses the network, the capability information of the UE needs to be reported to the network. The network configures the UE according to the capability information of the UE, and works with the UE, so as to implement data transmission between the UE and the network. The capability information of the UE includes radio capability information of the UE (UE radio capability) and core network capability information of the UE (UE core network capability). ARAN and a core network are responsible for the connection between the UE and the network. The access network side uses the UE radio capability to implement configuration between the access network and the UE, and the core network side uses the UE core network capability to implement configuration between the core network and the UE.

Specifically, the radio capability of the UE includes information about a radio access technology supported by the UE (for example, a power level, a frequency band, and the number of MIMO layers).

For example, the preset UE may send the radio capability (full radio capability) of the preset UE and the first radio capability (partial radio capability info 1) of the preset UE to the first AMF by using a non-access stratum (non-access stratum, NAS) message.

Further, after receiving the radio capability of the preset UE and the first radio capability of the preset UE that are sent by the preset UE, the first AMF may further store the radio capability of the preset UE and the first radio capability of the preset UE for subsequent use.

For example, the preset UE may further send the first message to the first AMF via the NAS message, where the first message indicates an additional increase of the UE radio capability. The first message may be "UE radio capability addition". After the first AMF receives the radio capability (full radio capability) of the preset UE and the first radio capability (partial radio capability info 1) of the preset UE, the first AMF stores the radio capability (full radio capability) of the preset UE and the first radio capability (partial radio capability info 1) of the preset UE.

Furthermore, the first AMF may also encode the radio capability (full radio capability) of the preset UE and the first radio capability (partial radio capability info 1) of the preset UE. For example, code 1 corresponds to the radio capability of the preset UE, and code 2 corresponds to the first radio capability of the preset UE. After the first AMF encodes the radio capability of the preset UE and the first radio capability of the preset UE, the first AMF synchronizes the codes with the preset UE. Optionally, the preset UE may also encode the radio capability of the preset UE and the first radio capability of the preset UE, and then synchronize the codes with the first AMF. This is not limited herein.

Optionally, the preset UE may further send the radio capability (full radio capability) of the preset UE and the first radio capability (partial radio capability info 1) of the preset UE to the first RAN by using a radio resource control (radio resource control, RRC) message. In addition, the first RAN sends the radio capability (full radio capability) of the preset UE and the first radio capability (partial radio capability info 1) of the preset UE to the first AMF by using an interface between RAN nodes (interface between RAN nodes, N2)). This is not limited herein.

Furthermore, when the first AMF receives the radio capability of the preset UE and the first radio capability of the preset UE that are sent by the first RAN, the radio capability of the preset UE and the first radio capability of the preset UE sent by the first RAN may also carry a first identifier. The first identifier indicates to store the radio capability of the preset UE and the first radio capability of the preset UE. The first AMF stores the radio capability of the preset UE and the first radio capability of the preset UE based on the first identifier. The first identifier may be "full/partial radio capability indication."

It can be understood that the description of the preset UE sending the radio capability of the preset UE and the first radio capability of the preset UE to the first AMF herein is merely an example. In actual application, the preset UE may further send the radio capability of the preset UE and the first radio capability of the preset UE to the first AMF based on a specific application scenario. This is not limited herein.

It should be noted that the description of steps 202 and 203 herein is merely an example. There is no mandatory sequence between step 202 and step 203. In a specific application scenario, the sequence should be set based on specific requirements. This is not limited herein.

203. The preset UE sends the radio capability of the preset UE and the second radio capability of the preset UE to the second AMF.

After the preset UE generates the first radio capability and the second radio capability of the preset UE, the preset UE may send the radio capability (full radio capability) of the preset UE and the second radio capability (partial radio capability info 2) of the preset UE to the second AMF. The preset UE is connected to the second AMF via the second RAN.

For example, the preset UE may send, by using an NAS message, the radio capability (full radio capability) of the preset UE and the second radio capability (partial radio capability info 2) of the preset UE to the second AMF.

Further, after receiving the radio capability of the preset UE and the second radio capability of the preset UE that are sent by the preset UE, the second AMF may further store the radio capability of the preset UE and the second radio capability of the preset UE for subsequent use.

For example, the preset UE may further send the first message to the second AMF by using an NAS message. The first message indicates an additional increase of the UE radio capability. The first message may be "UE radio capability addition." After receiving the radio capability (full radio capability) of the preset UE and the second radio capability (partial radio capability info 2) of the preset UE, the second AMF stores the radio capability (full radio capability) of the preset UE and the second radio capability (partial radio capability info 2) of the preset UE.

Furthermore, the second AMF may also encode the radio capability (full radio capability) of the preset UE and the second radio capability (partial radio capability info 2) of the preset UE. For example, code 1 corresponds to the radio capability of the preset UE, and code 3 corresponds to the second radio capability of the preset UE. After that, the second AMF synchronizes the codes with the preset UE. Optionally, the preset UE may also encode the radio capability of the preset UE and the second radio capability of the preset UE, and then synchronize the codes with the second AMF. This is not limited herein.

Optionally, the preset UE may further send, by using an RRC message, the radio capability (full radio capability) of the preset UE and the second radio capability (partial radio capability info 2) of the preset UE to the first RAN. In addition, the second RAN may send, by using an N2 message, the radio capability (full radio capability) of the preset UE and the second radio capability (partial radio capability info 2) of the preset UE to the second AMF.

Furthermore, when the second AMF receives the radio capability (full radio capability) of the preset UE and the second radio capability (partial radio capability info 2) of the preset UE sent by the second RAN, the radio capability (full radio capability) of the preset UE and the second radio capability (partial radio capability info 2) of the preset UE sent by the second RAN may further carry a first identifier. The first identifier indicates to store the radio capability (full radio capability) of the preset UE and the second radio capability (partial radio capability info 2) of the preset UE. The second AMF stores the radio capability (full radio capability) of the preset UE and the second radio capability (partial radio capability info 2) of the preset UE according to the first identifier. The first identifier may be "full/partial radio capability indication".

It can be understood that the description herein of the preset UE sending the radio capability of the preset UE and the second radio capability of the preset UE to the second AMF is merely an example. In actual applications, the setting may also be performed in combination with a specific application scenario. This is not limited herein.

It should be noted that the description herein of steps 202 and 203 is merely an example. There is no mandatory sequence between steps 202 and 203. In a specific application scenario, the setting should be performed in combination with specific requirements. This is not limited herein.

204. The preset UE sends the operation mode information of the preset UE to the first AMF and the second AMF.

When the connection status of the preset UE changes, for example, the preset UE changes from an idle state to a connected state, or the preset UE changes from being connected to one RAN to being connected to two RANs, or the preset UE changes from being connected to two RANs to being connected to one RAN, the preset UE may send the operation mode information of the preset UE to the first AMF and the second AMF. The operation mode information of the preset UE indicates the number of RANs that the preset UE is connected to.

For example, when the preset UE enters the dual connectivity/single connectivity state again, the preset UE sends single connectivity mode information or dual connectivity mode information to the first AMF and the second AMF. The single connectivity mode information indicates that the preset UE is connected to one RAN or that the preset UE is connected to a network through one RAN. The dual connectivity mode information indicates that the preset UE is connected to two RANs or that the preset UE is connected to a network through two RANs. The single connectivity mode information may be replaced with a full radio capability indication (full radio capability indication), or a code corresponding to the full radio capability, for example, code 1, which is not limited herein. The dual connectivity mode information may be replaced with a partial radio capability indication, or a code corresponding to the partial radio capability, for example, code 2 or code 3, which is not limited herein.

Specifically, when the preset UE is connected to the first RAN, the preset UE sends single connectivity mode information to the first AMF via the first RAN.

When the preset UE is connected to the second RAN, the preset UE sends single connectivity mode information to the second AMF via the second RAN.

When the preset UE is connected to both the first RAN and the second RAN, the preset UE sends dual connectivity mode information to both the first AMF and the second AMF.

It can be understood that the description of the content of the operation mode information of the preset UE herein is merely an example. In actual application, the operation mode information of the preset UE should be set in combination with a specific application scenario. This is not limited herein.

In the embodiments of this application, the preset AMF determines, by using the single connectivity mode information and the dual connectivity mode information, the number of RANs that the preset UE is connected to, and further determines, based on the number of RANs that the preset UE is connected to, a processing mode for the radio capability. This helps to accurately allocate the appropiate radio capability to the RAN(s) based on an actual connection status of the preset UE, so as to implement flexible switching between a single-RAN connection and a multi-RAN connection of the preset UE. This ensures accuracy of the solution while improving flexibility of the solution.

205. The first AMF sends, based on the operation mode information of the preset UE, the radio capability of the preset UE or the first radio capability of the preset UE to the first RAN;

After the first AMF obtains the operation mode information of the preset UE sent by the preset UE, the first AMF sends, based on the operation mode information of the preset UE, the radio capability of the preset UE or the first radio capability of the preset UE to the first RAN.

For example, when the preset UE is connected to the first RAN, the operation mode information of the preset UE indicates the single connectivity mode information, and the first AMF sends the radio capability of the preset UE to the first RAN.

When the preset UE is connected to both the first RAN and the second RAN, the operation mode information of the preset UE indicates the dual connectivity mode information, and the first AMF sends the first radio capability of the preset UE to the first RAN.

In the embodiments of this application, when the operation mode information indicates that the preset UE is connected to two RANs, the preset AMF sends the first radio capability of the preset UE to the first RAN. When the operation mode information indicates that the preset UE is connected to one RAN, the preset AMF sends the radio capability of the preset UE to the first RAN. By flexibly sending different radio capabilities to the first RAN according to the different numbers of RANs connected to the preset UE, the first RAN can properly perform, based on the radio capability, air interface configuration with the preset UE, thereby improving flexibility and feasibility of the solution.

Optionally, the first AMF may further send, to the first RAN, a correspondence between the radio capability of the preset UE and the single connectivity mode information, and a correspondence between the first radio capability of the preset UE and the dual connectivity mode information.

It may be understood that the description herein that the first AMF sends the radio capability of the preset UE and the first radio capability of the preset UE to the first RAN according to the operation mode information sent by the preset UE is merely an example. In actual application, setting should be made with reference to a specific application scenario. There is no limitation herein.

It should be noted that the description of step 205 and step 206 herein is only an example, and there is no mandatory sequence between step 205 and step 206. In a specific application scenario, setting should be made with reference to a specific requirement, and this is not limited herein.

206. The second AMF sends, based on the operation mode information of the preset UE, the radio capability of the preset UE or the second radio capability of the preset UE to the second RAN.

After obtaining the operation mode information of the preset UE sent by the preset UE, the second AMF sends the radio capability of the preset UE or the second radio capability of the preset UE to the second RAN based on the operation mode information of the preset UE.

For example, when the preset UE is connected to the second RAN, the operation mode information of the preset UE indicates the single connectivity mode information, and the second AMF sends the radio capability of the preset UE to the second RAN.

When the preset UE is connected to the first RAN and the second RAN, the operation mode information of the preset UE indicates the dual connectivity mode information, and the second AMF sends the second radio capability of the preset UE to the second RAN.

Optionally, the second AMF may further send, to the second RAN, a correspondence between the radio capability of the preset UE and the single connectivity mode information, and a correspondence between the second radio capability of the preset UE and the dual connectivity mode information.

It may be understood that the description herein that the second AMF sends the radio capability of the preset UE and the second radio capability of the preset UE to the second RAN according to the operation mode information sent by the preset UE is merely an example. In actual application, setting should be made with reference to a specific application scenario. There is no limitation herein.

It should be noted that the description of step 205 and step 206 herein is only an example, and there is no mandatory sequence between step 205 and step 206. In a specific application scenario, setting should be made with reference to a specific requirement, and this is not limited herein.

207. The first RAN performs air interface configuration with the preset UE according to the radio capability of the preset UE or the first radio capability of the preset UE.

After receiving the radio capability of the preset UE or the first radio capability of the preset UE, the first RAN performs air interface configuration with the preset UE according to the radio capability of the preset UE or the first radio capability of the preset UE.

Specifically, when the first AMF sends the correspondence between the radio capability of the preset UE and the single connectivity mode information, and the correspondence between the first radio capability of the preset UE and the dual connectivity mode information, to the first RAN,

When the preset UE is connected to the first RAN, the preset UE sends the single connectivity mode information to the first RAN via the RRC message. After obtaining the single connectivity mode information, the first RAN may perform air interface configuration with the preset UE by using the radio capability of the preset UE.

When the preset UE is connected to the first RAN and the second RAN, the preset UE sends the dual connectivity mode information to the first RAN via an RRC message, and the first RAN may use the first radio capability of the preset UE after obtaining the dual connectivity mode information and perform air interface configuration with the preset UE.

It should be noted that the description of step 207 and step 208 herein is only an example, and there is no mandatory sequence between step 207 and step 208. In a specific application scenario, setting should be made with reference to a specific requirement, and this is not limited herein.

208. The second RAN performs air interface configuration with the preset UE according to the radio capability of the preset UE or the second radio capability of the preset UE.

After receiving the radio capability of the preset UE or the second radio capability of the preset UE, the second RAN performs air interface configuration with the preset UE according to the radio capability of the preset UE or the second radio capability of the preset UE.

Specifically, when the second AMF sends the correspondence between the radio capability of the preset UE and the single connectivity mode information, and the correspondence between the second radio capability of the preset UE and the dual connectivity mode information, to the second RAN,

When the preset UE is connected to the second RAN, the preset UE sends the single connectivity mode information to the second RAN via an RRC message. After obtaining the single connectivity mode information, the second RAN may use the radio capability of the preset UE to perform air interface configuration with the preset UE.

When the preset UE is connected to both the first RAN and the second RAN, the preset UE sends the dual connectivity mode information to the second RAN via an RRC message. After obtaining the dual connectivity mode information, the second RAN may use the second radio capability of the preset UE to perform air interface configuration with the preset UE.

It should be noted that the descriptions of steps 207 and 208 herein are merely examples. There is no mandatory sequence between steps 207 and 208. In a specific application scenario, the steps should be set according to specific requirements. This is not limited herein.

In the embodiments of this application, the first AMF obtains the radio capability of the preset UE and the first radio capability of the preset UE. The first radio capability of the preset UE is a subset of the radio capability of the preset UE. The preset UE may be connected to the first AMF through the first RAN. After obtaining the operation mode information of the preset UE, the first AMF sends, to the first RAN, based on the number of RANs that the preset UE is connected to indicated by the operation mode information of the preset UE, the radio capability of the preset UE or the first radio capability of the preset UE. In this way, the first RAN performs air interface configuration with the preset UE based on the first radio capability of the preset UE or the radio capability of the preset UE. This avoids a situation in which, when the preset UE is simultaneously connected to multiple RANs, air interface resources cannot be properly configured. This provides a possibility for the preset UE to simultaneously connect to multiple RANs for data transmission, and improves data transmission stability and communication connection reliability of the preset UE.

It can be understood that the description of the RAT types of the first RAN and the second RAN herein is merely an example. In actual application, the RAT type of the first RAN and the RAT type of the second RAN may be the same. When the RAT type of the first RAN is the same as the RAT type of the second RAN, the first radio capability of the preset UE and the second radio capability of the preset UE are the same. This is not limited herein.

Optionally, step 209 may be performed before step 201. A specific implementation of step 209 is as follows:
209. The preset UE obtains the radio capability of the first RAN and the radio capability of the second RAN.

The preset UE obtains the radio capability of the first RAN from the broadcast message of the first RAN, and obtains the radio capability of the second RAN from the broadcast message of the second RAN. The radio capability of the first RAN may be information about a radio access technology (radio access technology, RAT) supported by the first RAN (for example, a power level, a frequency band, and the number of MIMO layers). The radio capability of the second RAN may be information about a radio access technology supported by the second RAN (for example, a power level, a frequency band, and the number of MIMO layers).

It may be understood that the description herein about a manner in which the UE obtains the radio capability of the first RAN and the radio capability of the second RAN is merely an example. In actual application, the setting should be made with reference to a specific application scenario, and is not limited herein.

It should be noted that step 209 is an optional step in a specific implementation, and the description herein is only an example, and may be selectively implemented in actual application. This is not limited herein.

When step 209 is performed, adaptive adjustment needs to be performed in step 201, which is specifically as follows:
The generating, by the preset UE, the first radio capability of the preset UE and the second radio capability of the preset UE may be: generating, by the preset UE, the first radio capability of the preset UE and the second radio capability of the preset UE according to the radio capability of the preset UE, the radio capability of the first RAN, and the radio capability of the second RAN, so that the first RAN supports the first radio capability of the preset UE, and the second RAN supports the second radio capability of the preset UE.

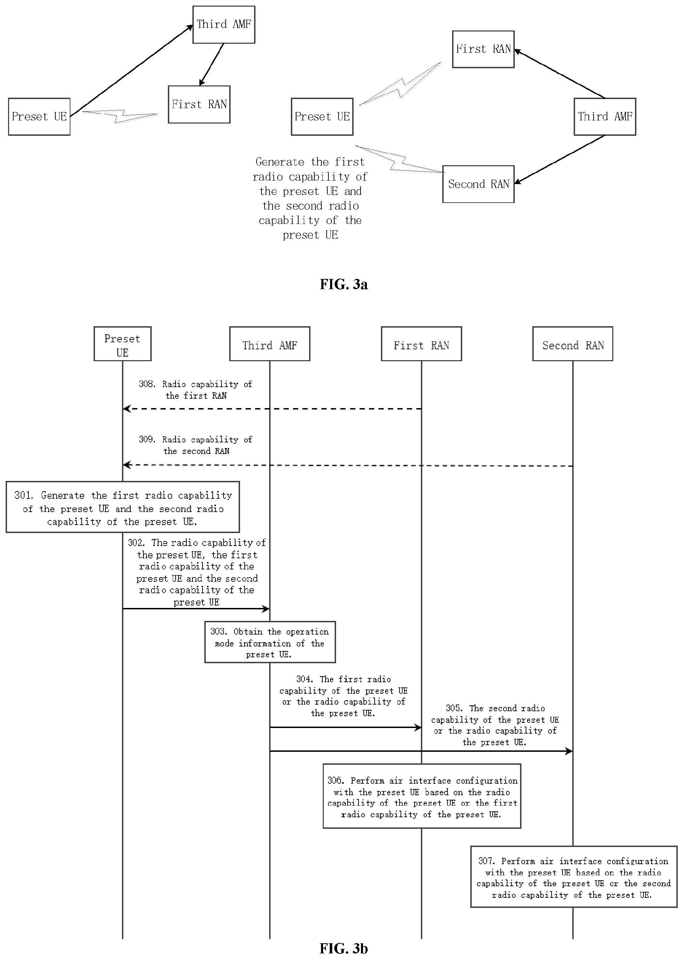

The following describes, with reference to FIG. 3a and FIG. 3b, a scenario in which a UE is connected to a third AMF through a first RAN, and the UE is also connected to the third AMF through a second RAN. This scenario is used to introduce the solution provided in this application:
As can be seen from FIG. 3a, the preset UE is connected to the third AMF via the first RAN, and the preset UE is also connected to the third AMF via the second RAN. The third AMF is the preset AMF.

The following describes, with reference to FIG. 3b, the solution provided in this application:
301. The preset UE generates a first radio capability of the preset UE and a second radio capability of the preset UE.

The operation of step 301 is similar to the operation performed in step 201 in FIG. 2b. For a specific implementation, refer to step 201 in FIG. 2b. Details are not described herein again.

302. The preset UE sends the radio capability of the preset UE, the first radio capability of the preset UE, and the second radio capability of the preset UE to the third AMF.

After the preset UE generates the first radio capability and the second radio capability of the preset UE, the preset UE sends the radio capability (full radio capability) of the preset UE, the first radio capability (partial radio capability info 1) of the preset UE, and the second radio capability (partial radio capability info 2) of the preset UE to the third AMF. The preset UE is connected to the third AMF via both the first RAN and the second RAN.

For example, when the preset UE is simultaneously connected to the first RAN and the second RAN, the preset UE sends, to the third AMF via the first RAN, the first radio capability (partial radio capability info 1) of the preset UE, and sends, to the third AMF via the second RAN, the second radio capability (partial radio capability info 2) of the preset UE.

When the preset UE is connected to the first RAN, the preset UE sends the radio capability (full radio capability) of the preset UE to the third AMF via the first RAN.

When the preset UE is connected to the second RAN, the preset UE sends the radio capability (full radio capability) of the preset UE to the third AMF via the second RAN.

Further, after obtaining the third AMF obtains the radio capability of the preset UE, the first radio capability of the preset UE, and the second radio capability of the preset UE, the third AMF stores the radio capability of the preset UE, the first radio capability of the preset UE, and the second radio capability of the preset UE.

Optionally, the first radio capability of the preset UE is the radio capability used when the preset UE is connected to the RAN of the first RAT type. The second radio capability of the preset UE is the radio capability used when the preset UE is connected to the RAN of the second RAT type.

It may be understood that the description herein that the preset UE sends the first radio capability of the preset UE and the second radio capability of the preset UE to the third AMF is merely an example. In actual application, the setting may also be made with reference to a specific application scenario. This is not limited herein.

303. The third AMF obtains operation mode information of the preset UE.

When the preset UE sends the operation mode information of the preset UE to the third AMF, and the connection status of the preset UE changes, for example, the preset UE changes from an idle state to a connected state, the preset UE changes from being connected to one RAN to being connected to two RANs, or the preset UE changes from being connected to two RANs to being connected to one RAN. The preset UE may send the operation mode information of the preset UE to the third AMF. The operation mode information of the preset UE indicates the number of RANs that the preset UE is connected to.

When the third AMF generates the operation mode information of the preset UE, since the third AMF manages the connections between the preset UE and the first RAN and the second RAN, the third AMF may generate the operation mode information of the preset UE based on the connection status between the preset UE and the RAN. The operation mode information of the preset UE indicates the number of RANs that the preset UE is connected to, or the operation mode information of the preset UE indicates that the preset UE is connected to one or two RANs. The operation mode information of the preset UE may include dual connectivity mode information and single connectivity mode information.

For example, when the preset UE enters the dual connectivity/single connectivity state again, the preset UE sends single connectivity mode information or dual connectivity mode information to the first AMF and the second AMF. The single connectivity mode information indicates that the preset UE is connected to one RAN or that the preset UE is connected to a network through one RAN. The dual connectivity mode information indicates that the preset UE is connected to two RANs or that the preset UE is connected to a network through two RANs. The single connectivity mode information may be replaced with a full radio capability indication (full radio capability indication), or a code corresponding to the full radio capability, for example, code 1, which is not limited herein. The dual connectivity mode information may be replaced with a partial radio capability indication, or a code corresponding to the partial radio capability, for example, code 2 or code 3, which is not limited herein.

Specifically, when the preset UE is connected to the first RAN, the preset UE sends single connectivity mode information to the third AMF via the first RAN.

When the preset UE is connected to the second RAN, the preset UE sends single connectivity mode information to the third AMF via the second RAN.

When the preset UE is connected to both the first RAN and the second RAN, the preset UE sends dual connectivity mode information to the third AMF.

It can be understood that the description of the content of the operation mode information of the preset UE herein is merely an example. In actual application, the operation mode information should be set in combination with a specific application scenario. This is not limited herein.

304. The third AMF sends, based on the operation mode information of the preset UE, the first radio capability of the preset UE or the radio capability of the preset UE to the first RAN.

After obtaining the operation mode information of the preset UE sent by the preset UE, the third AMF sends the radio capability of the preset UE or the first radio capability of the preset UE to the first RAN according to the operation mode information of the preset UE.

For example, when the preset UE is connected to the first RAN, the operation mode information of the preset UE indicates the single connectivity mode information, and the third AMF sends the radio capability of the preset UE to the first RAN.

When the preset UE is connected to the first RAN and the second RAN, the operation mode information of the preset UE indicates the dual connectivity mode information, and the third AMF sends the first radio capability of the preset UE to the first RAN.

Optionally, the third AMF may further send, to the first RAN, a correspondence between the radio capability of the preset UE and the single connectivity mode information, and a correspondence between the first radio capability of the preset UE and the dual connectivity mode information.

Further, when the third AMF sends the first radio capability of the preset UE to the first RAN, the third AMF sends the first radio capability of the preset UE to the first RAN based on the RAT type of the first RAN, where the RAT type of the first RAN is the first RAT type.

It can be understood that, the description herein of the third AMF sending, based on the operation mode information of the preset UE sent by the preset UE, the radio capability of the preset UE to the first RAN is merely an example. In actual application, the setting should be made in combination with a specific application scenario. No limitation is imposed herein.

It should be noted that the description herein of steps 304 and 305 is merely an example. There is no mandatory sequence between steps 304 and 305. In a specific application scenario, the setting should be made in combination with specific requirements. No limitation is imposed herein.

305. The third AMF sends, based on the operation mode information of the preset UE, the second radio capability of the preset UE or the radio capability of the preset UE to the second RAN.

After the third AMF obtains the operation mode information of the preset UE sent by the preset UE, the third AMF sends, based on the operation mode information of the preset UE, the radio capability of the preset UE or the second radio capability of the preset UE to the second RAN.

For example, when the preset UE is connected to the second RAN, the operation mode information of the preset UE indicates the single connectivity mode information, and the third AMF sends the radio capability of the preset UE to the second RAN.

When the preset UE is connected to the first RAN and the second RAN, the operation mode information of the preset UE indicates the dual connectivity mode information, and the third AMF sends the second radio capability of the preset UE to the second RAN.

Optionally, the third AMF may further send, to the second RAN, a correspondence between the radio capability of the preset UE and the single connectivity mode information, and a correspondence between the second radio capability of the preset UE and the dual connectivity mode information.

Further, when the third AMF sends the second radio capability of the preset UE to the second RAN, the third AMF sends the second radio capability of the preset UE to the second RAN based on the RAT type of the second RAN. The second radio capability of the preset UE is the radio capability used when the preset UE is connected to the RAN of the second RAT type, and the RAT type of the second RAN is the second RAT type. For example, the first RAT type may be a 5G RAT type, and the second RAT type may be a 6G RAT type. This is not limited herein.

It may be understood that the description herein that the third AMF sends the radio capability of the preset UE and the first radio capability of the preset UE to the second RAN according to the operation mode information sent by the preset UE is merely an example. In actual application, the setting should be made with reference to a specific application scenario. This is not limited herein.

It should be noted that the description of step 304 and step 305 herein is only an example, and there is no mandatory sequence between step 304 and step 305. In a specific application scenario, setting should be made with reference to a specific requirement, and this is not limited herein.

306. The first RAN performs air interface configuration with the preset UE according to the radio capability of the preset UE or the first radio capability of the preset UE.

After receiving the radio capability of the preset UE or the first radio capability of the preset UE, the first RAN performs air interface configuration with the preset UE according to the radio capability of the preset UE or the first radio capability of the preset UE.

Specifically, the third AMF sends the correspondence between the radio capability of the preset UE and the single connectivity mode information and the correspondence between the first radio capability of the preset UE and the dual connectivity mode information to the first RAN.

When the preset UE is connected to the first RAN, the preset UE sends single connectivity mode information to the first RAN via an RRC message. After obtaining the single connectivity mode information, the first RAN may use the radio capability of the preset UE to perform air interface configuration with the preset UE.

When the preset UE is connected to both the first RAN and the second RAN, the preset UE sends dual connectivity mode information to the first RAN via an RRC message. After obtaining the dual connectivity mode information, the first RAN may use the first radio capability of the preset UE to perform air interface configuration with the preset UE.

Optionally, when the third AMF sends the radio capability of the preset UE to the first RAN, the first RAN may use the radio capability of the preset UE to perform air interface configuration with the preset UE.

When the third AMF sends the first radio capability of the preset UE to the first RAN, the first RAN may use the first radio capability of the preset UE to perform air interface configuration with the preset UE.

It should be noted that the descriptions of steps 306 and 307 herein are merely examples. There is no mandatory sequence between step 306 and step 307. In a specific application scenario, the sequence should be set in combination with specific requirements. No limitation is imposed herein.

307. The second RAN performs air interface configuration with the preset UE according to the radio capability of the preset UE or the second radio capability of the preset UE.

Specifically, after the second RAN receives the radio capability of the preset UE or the second radio capability of the preset UE, the second RAN performs air interface configuration with the preset UE according to the radio capability of the preset UE or the second radio capability of the preset UE.

Specifically, when the second AMF sends, to the second RAN, the correspondence between the radio capability of the preset UE and the single connectivity mode information, and the correspondence between the second radio capability of the preset UE and the dual connectivity mode information,

When the preset UE is connected to the second RAN, the preset UE sends single connectivity mode information to the second RAN by using an RRC message. The second RAN may use the radio capability of the preset UE or the second radio capability of the preset UE to perform air interface configuration with the preset UE after obtaining the single connectivity mode information.

When the preset UE is connected to the first RAN and the second RAN, the preset UE sends the dual connectivity mode information to the second RAN by using an RRC message, and the second RAN may use the second radio capability of the preset UE after obtaining the dual connectivity mode information to perform air interface configuration with the preset UE.

Optionally, when the third AMF sends the radio capability of the preset UE to the second RAN, the second RAN performs air interface configuration with the preset UE by using the radio capability of the preset UE.

When the third AMF sends the second radio capability of the preset UE to the second RAN, the second RAN performs air interface configuration with the preset UE by using the second radio capability of the preset UE.

It should be noted that the description of step 306 and step 307 herein is only an example, and there is no mandatory sequence between step 306 and step 307. In a specific application scenario, setting should be made with reference to a specific requirement, and this is not limited herein.

In this embodiment of this application, the radio capability of the preset UE, the first radio capability of the preset UE, and the second radio capability of the preset UE are obtained by the third AMF. The third AMF sends, based on the operation mode information of the preset UE, corresponding radio capabilities to the first RAN and the second RAN, so that the preset UE can flexibly perform network handover, and simultaneously connect to two RANs for data transmission or connect to one RAN for data transmission. This improves data transmission flexibility of the UE.

Optionally, step 308 may be performed before step 301. A specific implementation of step 308 is as follows:
308. The preset UE obtains the radio capability of the first RAN and the radio capability of the second RAN.

The preset UE obtains the radio capability of the first RAN and the radio capability of the second RAN by obtaining the radio capability of the first RAN from a broadcast message of the first RAN, and obtaining the radio capability of the second RAN from a broadcast message of the second RAN. The radio capability of the first RAN may be information (for example, a power level, a frequency band, and the number of MIMO layers) about a radio access technology (radio access technology, RAT) supported by the first RAN. The radio capability of the second RAN may be information (for example, a power level, a frequency band, and the number of MIMO layers) about a radio access technology supported by the second RAN.

It may be understood that, herein, the description of a manner in which the preset UE obtains the radio capability of the first RAN and the radio capability of the second RAN is merely an example. In actual application, the manner should be set in combination with a specific application scenario. This is not limited herein.

It should be noted that step 308 is an optional step in a specific implementation, and the description herein is only an example, and may be selectively implemented in actual application. This is not limited herein.

When step 308 is performed, adaptive adjustment needs to be performed in step 301, which is specifically as follows:
The generating, by the preset UE, the first radio capability of the preset UE and the second radio capability of the preset UE may be: generating, by the preset UE, the first radio capability of the preset UE and the second radio capability of the preset UE according to the radio capability of the preset UE, the radio capability of the first RAN, and the radio capability of the second RAN, so that the first RAN supports the first radio capability of the preset UE, and the second RAN supports the second radio capability of the preset UE.

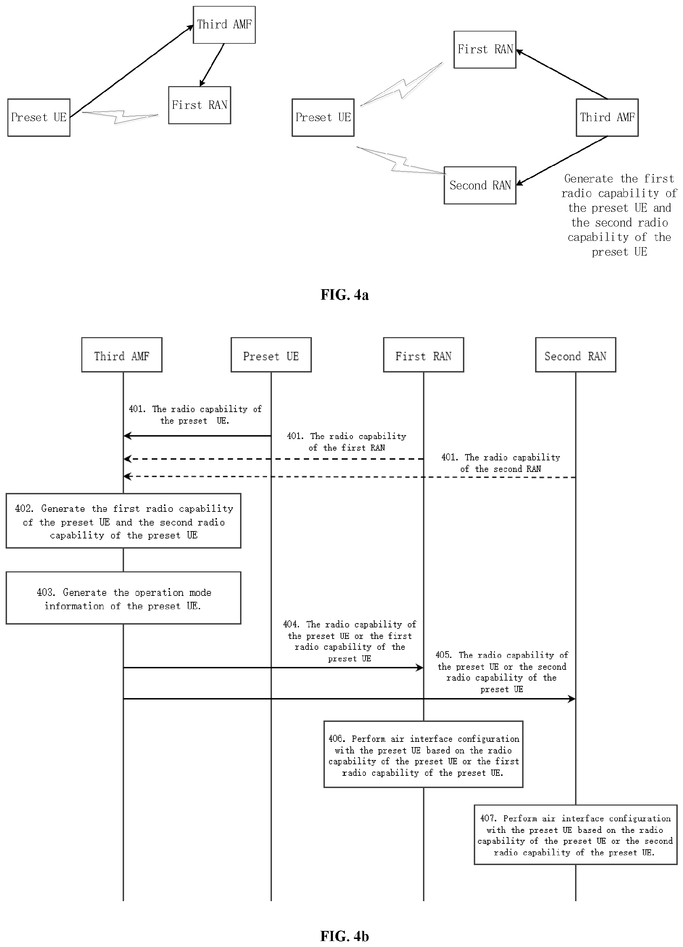

Based on the network composition structure described in FIG. 3a, the AMF may further generate the first radio capability of the preset UE and the second radio capability of the preset UE. The following describes this scenario with reference to FIG. 4a and FIG. 4b.

It can be learned from FIG. 4a that the preset UE is connected to the third AMF via the first RAN, and the preset UE is further connected to the third AMF via the second RAN. The third AMF is the preset AMF, and the third AMF generates the first radio capability of the preset UE and the second radio capability of the preset UE.

The following describes the solution provided in this application with reference to FIG. 4b:
401. A third AMF obtains the radio capability of the preset UE.

The third AMF obtains the radio capability of the preset UE sent by the preset UE.

Optionally, the third AMF further obtains the radio capability of the first RAN and the radio capability of the second RAN.

The third AMF obtains the radio capability of the first RAN from the first RAN, and the third AMF obtains the radio capability of the second RAN from the second RAN.

It may be understood that the description herein about a way the preset UE obtainss the radio capability of the first RAN and the radio capability of the second RAN is merely an example. In actual application, the setting should be made with reference to a specific application scenario, and is not limited herein.

402. The third AMF generates a first radio capability of the preset UE and a second radio capability of the preset UE.

Third AMF generates, a first radio capability (partial radio capability info 1) of the preset UE and a second radio capability (partial radio capability info 2) of the preset UE, where the first radio capability of the preset UE is a subset of the radio capability of the preset UE, and the second radio capability of the preset UE is a subset of the radio capability of the preset UE.

Optionally, the third AMF generates the first radio capability of the preset UE and the second radio capability of the preset UE based on the radio capability of the preset UE. Optionally, when the third AMF generates the first radio capability of the preset UE and the second radio capability of the preset UE, the third AMF may further generate the first radio capability of the preset UE and the second radio capability of the preset UE according to the radio capability of the preset UE, the radio capability of the first RAN, and the radio capability of the second RAN, so that the first RAN supports the first radio capability of the preset UE and the second RAN supports the second radio capability of the preset UE.

Furthermore, the first RAN supports the first radio capability of the preset UE, and the second RAN supports the second radio capability of the preset UE. That is, the first radio capability of the preset UE is also a subset of the radio capability of the first RAN, and the second radio capability of the preset UE is also a subset of the radio capability of the second RAN.

In addition, the radio capability of the preset UE comprises all radio capabilities supported by the preset UE. The first radio capability of the preset UE and the second radio capability of the preset UE are partial radio capabilities of the preset UE. In addition, the first radio capability of the preset UE has an association relationship with a radio access technology (radio access technology, RAT) of the RAN connected to the preset UE. The second radio capability of the preset UE has an association relationship with a RAT connected to the preset UE.

For example, the first radio capability of the preset UE is a radio capability used when the preset UE is connected to a RAN of a first RAT type, and the RAT type of the first RAN is the first RAT type. The second radio capability of the preset UE is a radio capability used when the preset UE is connected to a RAN of a second RAT type, and the RAT type of the second RAN is the second RAT type. For example, the first RAT type may be a 5G RAT type, and the second RAT type may be a 6G RAT type. This is not limited herein.

It can be understood that, the description herein of the preset UE generating the operation mode information of the preset UE and the operation mode information of the preset UE, and the description of the first RAT type and the second RAT type are merely examples. In actual applications, the first RAT type and the second RAT type should be set in combination with a specific application scenario. This is not limited herein.

403. The third AMF generates operation mode information of the preset UE.

Since the third AMF is responsible for access management of the preset UE, when the preset UE is connected to the first RAN and/or the preset UE is connected to the second RAN, the third AMF may generate the operation mode information of the preset UE based on the connection status between the preset UE and the RAN. The operation mode information of the preset UE indicates the number of RANs that the preset UE is connected to. This is not limited herein.

Specifically, when the connection status of the preset UE changes, for example, the preset UE changes from an idle state to a connected state, or the preset UE changes from being connected to one RAN to being connected to two RANs, or the preset UE changes from being connected to two RANs to being connected to one RAN, the third AMF generates operation mode information of the preset UE.

In addition, the operation mode information of the preset UE may include dual connectivity mode information and single connectivity mode information. The single connectivity mode information indicates that the preset UE is connected to one RAN or that the preset UE is connected to a network through one RAN. The dual connectivity mode information indicates that the preset UE is connected to two RANs or that the preset UE is connected to a network through two RANs. The single connectivity mode information may be replaced with a full radio capability indication (full radio capability indication), or a code corresponding to the full radio capability, for example, code 1, which is not limited herein. The dual connectivity mode information may be replaced with a partial radio capability indication, or a code corresponding to the partial radio capability, for example, code 2 or code 3, which is not limited herein.

It may be understood that the description herein about the operation mode information of the preset UE is merely an example. In actual application, the setting should be made with reference to a specific application scenario, and is not limited herein.

404. The third AMF sends the radio capability of the preset UE or the first radio capability of the preset UE to the first RAN based on the operation mode information of the preset UE.

After generating the operation mode information of the preset UE, the third AMF sends the radio capability of the preset UE or the first radio capability of the preset UE to the first RAN based on the operation mode information of the preset UE.

For example, when the preset UE is connected to the first RAN, the operation mode information of the preset UE indicates the single connectivity mode information, and the third AMF sends the radio capability of the preset UE to the first RAN.

When the preset UE is connected to the first RAN and the second RAN, the operation mode information of the preset UE indicates the dual connectivity mode information, and the third AMF sends the first radio capability of the preset UE to the first RAN.

Optionally, the third AMF may further send, to the first RAN, a correspondence between the radio capability of the preset UE and the single connectivity mode information, and a correspondence between the first radio capability of the preset UE and the dual connectivity mode information.

It may be understood that the description herein that the third AMF sends the radio capability of the preset UE and the first radio capability of the preset UE to the first RAN according to the operation mode information sent by the preset UE is merely an example. In actual application, the setting should be made with reference to a specific application scenario. There is no limitation herein.

It should be noted that the description of step 404 and step 405 herein is only an example, and there is no mandatory sequence between step 404 and step 405. In a specific application scenario, setting should be made with reference to a specific requirement, and this is not limited herein.

405. The third AMF sends the radio capability of the preset UE or the second radio capability of the preset UE to the second RAN according to the operation mode information of the preset UE.

After generating the operation mode information of the preset UE, the third AMF sends the radio capability of the preset UE or the first radio capability of the preset UE to the first RAN based on the operation mode information of the preset UE.

For example, when the preset UE is connected to the first RAN, the operation mode information of the preset UE indicates the single connectivity mode information, and the third AMF sends the radio capability of the preset UE to the first RAN.

When the preset UE is connected to the first RAN and the second RAN, the operation mode information of the preset UE indicates the dual connectivity mode information, and the third AMF sends the first radio capability of the preset UE to the first RAN.

Optionally, the third AMF may further send, to the first RAN, a correspondence between the radio capability of the preset UE and the single connectivity mode information, and a correspondence between the first radio capability of the preset UE and the dual connectivity mode information.

It may be understood that the description herein that the third AMF sends the radio capability of the preset UE and the first radio capability of the preset UE to the first RAN according to the operation mode information sent by the preset UE is merely an example. In actual application, the setting should be made with reference to a specific application scenario. There is no limitation herein.

It should be noted that the descriptions of step 404 and step 405 herein are merely examples. There is no mandatory sequence between step 404 and step 405. In a specific application scenario, the steps should be set in combination with specific requirements. No limitation is imposed herein.

406. The first RAN performs air interface configuration with the preset UE based on the radio capability of the preset UE or the first radio capability of the preset UE.

407. The second RAN performs air interface configuration with the preset UE based on the radio capability of the preset UE or the second radio capability of the preset UE.

Steps 406 and 407 are similar to steps 306 and 307 in the aforementioned Figure 3b. For specific implementation methods, refer to the descriptions in Figure 3b. No further details are provided herein.

It should be noted that the descriptions of step 406 and step 407 herein are merely examples. There is no mandatory sequence between step 406 and step 407. In a specific application scenario, the steps should be set in combination with specific requirements. No limitation is imposed herein.

In the embodiments of this application, the third AMF collects the radio capability of the preset UE, the radio capability of the first RAN, and the radio capability of the second RAN. Based on the radio capability of the preset UE, the radio capability of the first RAN, and the radio capability of the second RAN, the third AMF generates the first radio capability of the preset UE and the second radio capability of the preset UE. The third AMF generates the operation mode information of the preset UE, and based on the operation mode information of the preset UE, sends a proper radio capability of the preset UE to the first RAN and the second RAN, so as to implement air interface configuration of the preset UE. The third AMF generates the first radio capability of the preset UE and the second radio capability of the preset UE, which improves the flexibility in implementing the solution.

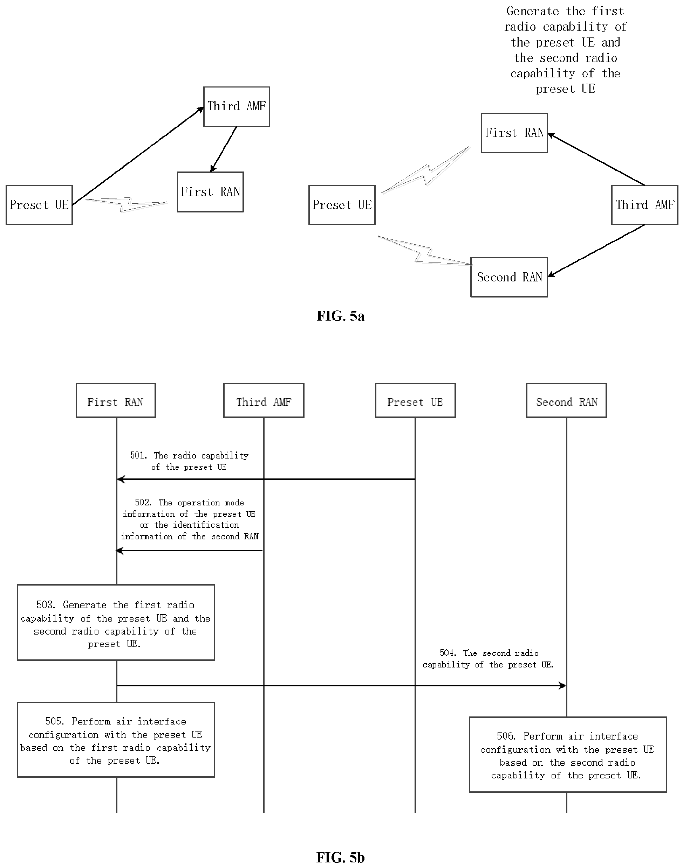

Based on the network composition structure introduced in FIG. 3a, the first RAN may further generate the first radio capability of the preset UE and the second radio capability of the preset UE. The following describes this scenario with reference to FIG. 5a and FIG. 5b:
As can be seen from Figure 5a, the preset UE is connected to the third AMF via the first RAN. In addition, the preset UE is also connected to the third AMF via the second RAN. Herein, the third AMF is the preset AMF, and the first RAN generates the first radio capability of the preset UE and the second radio capability of the preset UE.

The following describes the solution provided in this application with reference to FIG. 5b:
501. The first RAN obtains the radio capability of the preset UE.

When the preset UE is connected to the third AMF via the first RAN, the first RAN obtains the radio capability of the preset UE sent by the preset UE.

Specifically, the third AMF obtains the radio capability of the preset UE from the preset UE, and sends the radio capability of the preset UE to the first RAN.

502. The third AMF sends the operation mode information of the preset UE or the identification information of the second RAN to the first RAN.

Since the third AMF is responsible for managing the access of the preset UE, the third AMF can send the operation mode information of the preset UE or the identification information of the second RAN to the first RAN. The operation mode information of the preset UE indicates the number of RANs that the preset UE is connected to.

When the connection status of the preset UE changes, for example, the preset UE changes from an idle state to a connected state, or the preset UE changes from being connected to one RAN to being connected to two RANs, or the preset UE changes from being connected to two RANs to being connected to one RAN, the third AMF can send the operation mode information of the preset UE to the first RAN. The operation mode information of the preset UE is generated by the third AMF.

Specifically, when the connection status of the preset UE changes, the third AMF may generate the operation mode information of the preset UE based on the connection status between the preset UE and the RAN, where the operation mode information of the preset UE indicates the number of RANs that the preset UE is connected to.

In addition, the operation mode information of the preset UE may include dual connectivity mode information and single connectivity mode information. The single connectivity mode information indicates that the preset UE is connected to one RAN or that the preset UE is connected to a network through one RAN. The dual connectivity mode information indicates that the preset UE is connected to two RANs or that the preset UE is connected to a network through two RANs. The single connectivity mode information may be replaced with a full radio capability indication (full radio capability indication), or a code corresponding to the full radio capability, for example, code 1, which is not limited herein. The dual connectivity mode information may be replaced with a partial radio capability indication, or a code corresponding to the partial radio capability, for example, code 2 or code 3, which is not limited herein.

Specifically, when the preset UE is connected to the first RAN, the third AMF sends single connectivity mode information to the first RAN.

When the preset UE is connected to both the first RAN and the second RAN, the third AMF sends dual connectivity mode information to the first RAN.

It can be understood that the description of the content of the operation mode information of the preset UE herein is merely an example. In actual applications, it should be set in combination with a specific application scenario. No limitation is imposed herein.

Specifically, the identification information of the second RAN may be a cell identification of the second RAN or a device identification of the second RAN. No limitation is imposed herein.

503. The first RAN generates the first radio capability of the preset UE and the second radio capability of the preset UE.

When the first RAN obtains the radio capability of the preset UE, and the operation mode information of the preset UE is the dual connectivity mode information, the first RAN generates, based on the radio capability of the preset UE, the first radio capability of the preset UE and the second radio capability of the preset UE. The first radio capability of the preset UE is a subset of the radio capability of the first RAN, and the second radio capability of the preset UE is a subset of the radio capability of the second RAN.

Furthermore, the first RAN may also obtain the identification information of the second RAN sent by the third AMF, for example, the cell identification corresponding to the second RAN, so that the first RAN can generate, the first radio capability of the preset UE and the second radio capability of the preset UE, based on the radio capability of the first RAN, the radio capability of the second RAN, and the radio capability of the preset UE. The first radio capability of the preset UE is a subset of the radio capability of the first RAN, and the second radio capability of the preset UE is a subset of the radio capability of the second RAN.

It can be understood that the description herein of the first RAN generating the first radio capability of the preset UE and the second radio capability of the preset UE is merely an example. In actual application, the first radio capability and the second radio capability of the preset UE should be set in combination with a specific application scenario. This is not limited herein.

Optionally, the first radio capability of the preset UE is a radio capability used when the preset UE is connceted to a RAN of a first RAT type, and the RAT type of the first RAN is the first RAT type. The second radio capability of the preset UE is a radio capability used when the preset UE is connected to a RAN of a second RAT type, and the RAT type of the second RAN is the second RAT type. For example, the first RAT type may be a 5G RAT type, and the second RAT type may be a 6G RAT type. This is not limited herein.

504. The first RAN sends the second radio capability of the preset UE to the second RAN.

After the first RAN generates the first radio capability of the preset UE and the second radio capability of the preset UE, when the operation mode information of the preset UE indicates that the preset UE is in dual connectivity mode, the first RAN sends the second radio capability of the preset UE to the second RAN.

Optionally, since the RAT type of the second RAN is the second RAT type, the first RAN sends the second radio capability of the preset UE to the second RAN.

505. The first RAN performs air interface configuration with the preset UE based on the first radio capability of the preset UE.

After the first RAN generates the first radio capability of the preset UE and the second radio capability of the preset UE, when the operation mode information of the preset UE indicates that the preset UE is connected to two RANs, the first RAN performs air interface configuration with the preset UE based on the first radio capability of the preset UE.

Specifically, when the preset UE is connected to the first RAN and the second RAN, the first RAN uses the first radio capability of the preset UE to perform air interface configuration with the preset UE.

It should be noted that the descriptions of step 505 and step 506 herein are merely examples. There is no mandatory sequence between step 505 and step 506. In a specific application scenario, the sequence should be set in combination with specific requirements. This is not limited herein.

506. The second RAN performs air interface configuration with the preset UE based on the second radio capability of the preset UE.

When the operation mode information of the preset UE indicates that the preset UE is connected to two RANs, and after the second RAN receives the second radio capability of the preset UE sent by the first RAN, the second RAN performs air interface configuration with the preset UE based on the second radio capability of the preset UE. In this way, the air interface configuration between the second RAN and the preset UE is performed based on the second radio capability of the preset UE.

Specifically, when the preset UE is connected to the first RAN and the second RAN, the second RAN uses the second radio capability of the preset UE to perform air interface configuration with the preset UE.

It should be noted that the descriptions of steps 505 and 506 herein are merely examples. There is no mandatory sequence between step 505 and step 506. In a specific application scenario, the sequence should be set in combination with specific requirements. This is not limited herein.

In the embodiments of this application, when the preset UE is connected to two RANs, and the preset AMF simultaneously manages the connections between the two RANs and the preset UE, the preset AMF further obtains the second radio capability of the preset UE, and sends the second radio capability of the preset UE to the second RAN, so that the second RAN performs air interface configuration with the preset UE based on the second radio capability of the preset UE, where the preset UE is connected to the preset AMF via the second RAN. In this way, when the preset AMF simultaneously manages the connections between the two RANs and the preset UE, the second RAN-related radio capability transmission and configuration are resolved, and the integrity of the solution is improved.

In the embodiments of this application, the first radio capability of the preset UE may be a radio capability generated by the preset AMF, the preset UE, or the first RAN. Multiple nodes may generate the first radio capability of the preset UE, thereby improving the flexibility of implementing the solution.

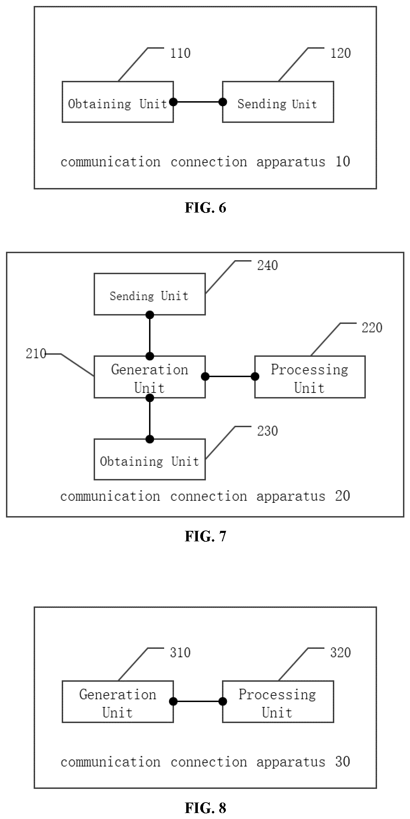

The foregoing describes the method for establishing a communication connection provided in the embodiments of this application. The following describes, with reference to the accompanying drawings, the apparatus for establishing a communication connection provided in the embodiments of this application:
Referring to FIG. 6, a communication connection apparatus 10 includes:
an obtaining unit 110, configured to obtain the radio capability of the preset UE and the first radio capability of the preset UE, where the first radio capability of the preset UE is a subset of the radio capability of the preset UE, and the preset UE is connected to the preset AMF via the first RAN; and
the obtaining unit 110 is further configured to obtain operation mode information of the preset UE, where the operation mode information of the preset UE indicates the number of RANs that the preset UE is connected to; and
a sending unit 120, configured to send the radio capability of the preset UE or the first radio capability of the preset UE to the first RAN according to the operation mode information of the preset UE, so that the first RAN performs air interface configuration with the preset UE based on the first radio capability of the preset UE or the radio capability of the UE.

Optionally, the sending unit 120 is specifically configured to:
when the operation mode information indicates that the preset UE is connected to two RANs, send the first radio capability of the preset UE to the first RAN according to the operation mode information; and
when the operation mode information indicates that the preset UE is connected to one RAN, send the radio capability of the preset UE to the first RAN according to the operation mode information.

Optionally, the operation mode information comprises single connectivity mode information or dual connectivity mode information, the single connectivity mode information indicates that the preset UE is connected to one RAN, and the dual connectivity mode information indicates that the preset UE is connected to two RANs.

The obtaining unit 110 is specifically configured to obtain single connectivity mode information or dual connectivity mode information sent by the preset UE.

Optionally, the first radio capability of the preset UE is a radio capability set generated by a first device based on the radio capability of the preset UE. The first device is the preset AMF, the preset UE, or the first RAN.

Optionally, the obtaining unit 110 is further configured to obtain the second radio capability of the preset UE, where the second radio capability of the preset UE is a subset of the radio capability of the preset UE, and the preset UE is connected to the preset AMF via the second RAN.

When the operation mode information indicates that the preset UE is connected to two RANs, the sending unit 120 is further configured to send the second radio capability of the preset UE to the second RAN, so that the second RAN performs air interface configuration with the preset UE based on the second radio capability of the preset UE.

Optionally, the obtaining unit 110 is specifically configured to: when the preset UE is connected to the preset AMF via the first RAN and the second RAN respectively, generate the operation mode information of the preset UE, where the operation mode information of the preset UE indicates that the preset UE is connected to two RANs.

Optionally, the first radio capability of the preset UE is a radio capability used when the preset UE is connected to a RAN of the first RAT type. The RAT type of the first RAN is the first RAT type.

Optionally, the second radio capability of the preset UE is a radio capability used when the preset UE is connected to a RAN of the second RAT type. The RAT type of the second RAN is the second RAT type.

FIG. 7 shows a communication connection apparatus 20, including:
a generation unit 210, configured to generate a first radio capability of the preset UE and a second radio capability of the preset UE, where the first radio capability of the preset UE is a subset of the radio capability of the preset UE, and the second radio capability of the preset UE is a subset of the radio capability of the preset UE; and
a processing unit 220, configured to process the first radio capability of the preset UE and the second radio capability of the preset UE, so that when the preset UE is connected to the first RAN and the preset UE is connected to the second RAN, the first RAN performs air interface configuration with the preset UE according to the first radio capability of the preset UE, and the second RAN performs air interface configuration with the preset UE according to the second radio capability of the preset UE.

Optionally, the apparatus further includes an obtaining unit 230, configured to obtain the radio capability of the preset UE, the radio capability of the first RAN, and the radio capability of the second RAN.

The generation unit 210 is specifically configured to generate the first radio capability of the preset UE and the second radio capability of the preset UE based on the radio capability of the preset UE, the radio capability of the first RAN, and the radio capability of the second RAN.

Optionally, the processing unit 220 is specifically configured to:
send the first radio capability of the preset UE to the first AMF, where the first AMF is responsible for access management of the preset UE; and
send the second radio capability of the preset UE to the second AMF, where the second AMF is responsible for access management of the preset UE.

Optionally, the processing unit 220 is specifically configured to send the first radio capability of the preset UE and the second radio capability of the preset UE to the preset AMF, where the preset AMF is responsible for access management of the preset UE.

Optionally, the apparatus further includes a sending unit 240, configured to send single-connection mode information or dual-connection mode information to the preset AMF, where the single connectivity mode information indicates that the preset UE is connected to one RAN, and the dual connectivity mode information indicates that the preset UE is connected to two RANs.

Optionally, the first radio capability of the preset UE is a radio capability used when the preset UE is connected to a RAN of the first RAT type, and the second radio capability of the preset UE is a radio capability used when the preset UE is connected to a RAN of the second RAT type.

FIG. 8 shows a communication connection apparatus 30, including:
a generation unit 310, configured to generate a first radio capability of the preset UE and a second radio capability of the preset UE, where the first radio capability of the preset UE is a subset of the radio capability of the preset UE; and the second radio capability of the preset UE is a subset of the radio capability of the preset UE; and
a processing unit 320, configured to process the first radio capability of the preset UE and the second radio capability of the preset UE, so that when the preset UE is connected to the first RAN and the preset UE is connected to the second RAN, the first RAN performs air interface configuration with the preset UE based on the first radio capability of the preset UE, and the second RAN performs air interface configuration with the preset UE based on the second radio capability of the preset UE.

Optionally, the apparatus further includes an obtaining unit 330, configured to obtain the radio capability of the preset UE, the radio capability of the first RAN, and the radio capability of the second RAN;

The generation unit 310 is configured to generate the first radio capability of the preset UE and the second radio capability of the preset UE based on the radio capability of the preset UE, the radio capability of the first RAN, and the radio capability of the second RAN.

Optionally, the processing unit 320 is specifically configured to:
perform air interface configuration with the preset UE based on the first radio capability of the preset UE; and
send the second radio capability of the preset UE to the second RAN, so that the second RAN performs air interface configuration with the preset UE based on the second radio capability of the preset UE.

Optionally, the first radio capability of the preset UE is a radio capability used when the preset UE is connected to a RAN of the first radio access technology RAT type. The second radio capability of the preset UE is a radio capability used when the preset UE is connected to a RAN of the second RAT type.

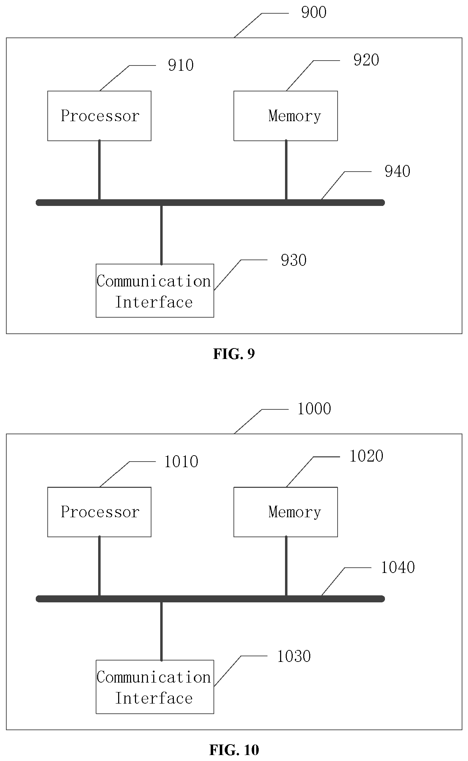

Below, please refer to FIG. 9. FIG. 9 is a schematic structural diagram of one apparatus for establishing a communication connection according to an embodiment of this application. The apparatus 900 for establishing a communication connection includes a processor 910, a memory 920, a communication interface 930, and a bus 940. The processor 910, the memory 920, the communication interface 930, and the bus 940 communicate with each other. Alternatively, the processor 910 may communicate with the memory 920 through the bus 940, or may communicate with the memory 920 through wireless transmission or by using another means. The memory 920 stores program code, and the processor 910 may invoke the program code stored in the memory 920 to perform the operations performed by the first AMF, the second AMF, or the third AMF in the foregoing content, to implement any one of the communication connection methods provided in the embodiments of this application. Details are not described herein again.

It should be understood that, in this embodiment of this application, the processor 910 may be a CPU, or the processor 910 may be another general-purpose processor or a digital signal processor (digital signal processing, DSP), Application Specific Integrated Circuit (ASIC), Field Programmable Gate Array (FPGA) or other programmable logic devices, discrete gates or transistor logic devices, discrete hardware components, and the like. The general-purpose processor may be a microprocessor, any conventional processor, or the like.

The memory 920 may include a read-only memory and a random access memory, and provide an instruction and data for the processor 910. The memory 920 may further include a nonvolatile random access memory. For example, the memory 920 may further store information about a device type.

The memory 920 may be volatile memory or nonvolatile memory, or may include both volatile and nonvolatile memory. The nonvolatile memory may be a read-only memory (read-only memory, ROM), a programmable read-only memory (programmable ROM, PROM), an erasable programmable read-only memory (erasable PROM), EPROM), electrically erasable programmable read-only memory (EPROM), or flash memory. The volatile memory may be a random access memory (random access memory, RAM) used as an external cache. By way of example but not limitation, many forms of RAM are available, such as static random access memory (SRAM), dynamic random access memory (DRAM), synchronous dynamic random access memory (DRAM), SDRAM), double data rate synchronous dynamic random access memory (DDR SDRAM), enhanced synchronous dynamic random access memory (ESDRAM), synchronously connected dynamic random access memory (synchlink DRAM, SLDRAM) and direct rambus random access memory (DR RAM).

In addition to including a data bus, the bus 940 may also include a power bus, a control bus, a status signal bus, and the like. However, for the sake of clarity, in the figure, all types of buses are labeled as bus 940. Bus 940 may be a Peripheral Component Interconnect Express (PCIe) bus, or an extended industry standard architecture (EISA) bus, a unified bus (unified bus, Ubus, or UB), a compute express link (CXL), a cache coherent interconnect for accelerators (CCIX), and the like. Bus 740 may be divided into an address bus, a data bus, a control bus, and the like.

The apparatus 900 for communication connection may further include one or more communication interfaces and one or more operating systems, such as Windows ServerTM, Mac OS XTM, UnixTM, LinuxTM, and FreeBSDTM.

It should be noted that FIG. 9 is merely a possible implementation of this embodiment of this application. In actual application, the communication connection apparatus 900 may further include more or fewer components. This is not limited herein. For content that is not shown or described in this embodiment of this application, refer to the description related to the AMF in FIG. 2b, FIG. 3b, FIG. 4b, or FIG. 5b. Details are not described herein again.

Referring to FIG. 10 below, FIG. 10 is a schematic structural diagram of a communication connection apparatus according to an embodiment of this application. The apparatus 1000 for communication connection includes a processor 1010, a memory 1020, a communication interface 1030, and a bus 1040. The processor 1010, the memory 1020, and the communication interface 1030 perform communication by using the bus 1040, or may implement communication by using other means such as wireless transmission. The memory 1020 stores program code, and the processor 1010 may invoke the program code stored in the memory 1020 to perform the operations performed by the first AMF, the second AMF, or the third AMF, to implement any communication connection method provided in the embodiments of this application. Details are not described herein again.

It should be understood that, in this embodiment of this application, the processor 1010 may be a CPU, or the processor 1010 may be another general purpose processor or a digital signal processing (digital signal processing, DSP), application specific integrated circuit (ASIC), field programmable gate array (FPGA) or other programmable logic device, discrete gate or transistor logic device, discrete hardware component, and the like. The general-purpose processor may be a microprocessor, any conventional processor, or the like.

The memory 1020 may include a read-only memory and a random access memory, and provide an instruction and data for the processor 1010. The memory 1020 may further include a nonvolatile random access memory. For example, the memory 1020 may further store information about a device type.

The memory 1020 may be volatile memory or nonvolatile memory, or may include both volatile and nonvolatile memory. The nonvolatile memory may be a read-only memory (read-only memory, ROM), a programmable read-only memory (programmable ROM, PROM), an erasable programmable read-only memory (erasable PROM), EPROM), electrically erasable programmable read-only memory (EPROM), or flash memory. The volatile memory may be a random access memory (random access memory, RAM) used as an external cache. By way of example but not limitation, many forms of RAM are available, such as static random access memory (SRAM), dynamic random access memory (DRAM), synchronous dynamic random access memory (DRAM), SDRAM), double data date synchronous dynamic random access memory (DDR SDRAM), enhanced synchronous dynamic random access memory (ESDRAM), synchronously connected dynamic random access memory (synchlink DRAM, SLDRAM) and direct rambus random access memory (DR RAM).

In addition to including a data bus, the bus 1040 may also include a power bus, a control bus, a status signal bus, and the like. However, for the sake of clarity, in the figure, all types of buses are labeled as bus 1040. Bus 1040 may be a Peripheral Component Interconnect Express (PCIe) bus, or an extended industry standard architecture (EISA) bus, a unified bus (unified bus, Ubus, or UB), a compute express link (CXL), a cache coherent interconnect for accelerators (CCIX), and the like. Bus 740 may be divided into an address bus, a data bus, a control bus, and the like.

The apparatus 1000 for communication connection may further include one or more communication interfaces and one or more operating systems, such as Windows ServerTM, Mac OS XTM, UnixTM, LinuxTM, and FreeBSDTM.

It should be noted that FIG. 10 is merely a possible implementation of this embodiment of this application. In actual application, the communication connection apparatus 1000 may further include more or fewer components. This is not limited herein. For content that is not shown or described in this embodiment of this application, refer to the description related to the preset UE in FIG. 2b, FIG. 3b, FIG. 4b, or FIG. 5b. Details are not described herein again.

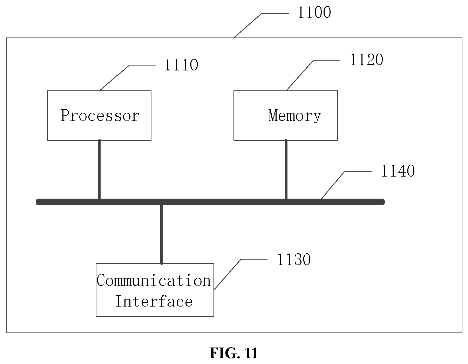

Referring to FIG. 11, FIG. 11 is a schematic structural diagram of a communication connection apparatus according to an embodiment of this application. The apparatus 1100 for communication connection includes a processor 1110, a memory 1120, a communication interface 1130, and a bus 1140. The processor 1110, the memory 1120, and the communication interface 1130 perform communication by using the bus 1140, or may implement communication by using other means such as wireless transmission. The memory 1120 stores program code, and the processor 1110 may invoke the program code stored in the memory 1120 to perform the operations performed by the first AMF, the second AMF, or the third AMF, to implement any communication connection method provided in the embodiments of this application. Details are not described herein again.

It should be understood that, in this embodiment of this application, the processor 1110 may be a CPU, or the processor 1110 may be another general-purpose processor or a digital signal processing (digital signal processing, DSP), application specific integrated circuit (ASIC), field programmable gate array (FPGA) or other programmable logic device, discrete gate or transistor logic device, discrete hardware components, and the like. The general-purpose processor may be a microprocessor, any conventional processor, or the like.

The memory 1120 may include a read-only memory and a random access memory, and provide an instruction and data for the processor 1110. The memory 1120 may further include a nonvolatile random access memory. For example, the memory 1120 may further store information about a device type.

The memory 1120 may be a volatile memory or a non-volatile memory, or may include both volatile and non-volatile memory. The nonvolatile memory may be a read-only memory (read-only memory, ROM), a programmable read-only memory (programmable ROM, PROM), an erasable programmable read-only memory (erasable PROM), EPROM), electrically erasable programmable read-only memory (EPROM), or flash memory. The volatile memory may be a random access memory (random access memory, RAM) used as an external cache. By way of example but not limitation, many forms of RAM are available, such as static random access memory (SRAM), dynamic random access memory (DRAM), synchronous dynamic random access memory (DRAM), SDRAM), double data date synchronous dynamic random access memory (DDR SDRAM), enhanced synchronous dynamic random access memory (ESDRAM), synchronously connected dynamic random access memory (synchlink DRAM, SLDRAM) and direct rambus random access memory (DR RAM).

In addition to including a data bus, the bus 1140 may also include a power bus, a control bus, a status signal bus, and the like. However, for the sake of clarity, in the figure, all types of buses are labeled as bus 1140. Bus 1140 may be a Peripheral Component Interconnect Express (PCIe) bus, or an extended industry standard architecture (EISA) bus, a unified bus (unified bus, Ubus, or UB), a compute express link (CXL), a cache coherent interconnect for accelerators (CCIX), and the like. Bus 740 may be divided into an address bus, a data bus, a control bus, and the like.

The communication connection apparatus 1100 may further include one or more communication interfaces, one or more operating systems, for example, Windows ServerTM, Mac OS XTM, UnixTM, LinuxTM, FreeBSDTM, etc.

It should be noted that FIG. 11 is merely a possible implementation of an embodiment of this application. In actual application, the communication-connected apparatus 1100 may further include more or fewer components. This is not limited herein. As for content that is not shown or described in the embodiments of this application, refer to the first RAN-related descriptions in FIG. 2b, FIG. 3b, FIG. 4b, or FIG. 5b. Details are not described herein again.

An embodiment of this application further provides a computer-readable storage medium, including computer-readable instructions. When the computer-readable instructions are run on a computer, the computer is enabled to perform any implementation of any one of the foregoing method embodiments.

An embodiment of this application further provides a computer program product, where the computer program product includes a computer program or instructions. When the computer program or instructions are run on a computer, the computer is enabled to perform any implementation of any one of the foregoing method embodiments.

A person skilled in the art of the application can clearly understand that, for the purpose of convenient and concise description, the specific working processes of the systems, apparatuses, and units described above may refer to the corresponding processes in the method embodiments described above. These processes will not be further described herein.

In several embodiments provided in this application, it should be understood that the disclosed systems, apparatuses, and methods may be implemented in other ways. For example, the apparatus embodiments described above are merely illustrative. For example, the division of units is merely a logical function division, and may be implemented in another division manner in actual implementation. For example, a plurality of units or components may be combined or integrated into another system, or some features may be ignored or not performed. In addition, the mutual couplings or direct couplings or communication connections that are displayed or discussed between the units may be implemented through some interfaces. The indirect couplings or communication connections between the apparatuses or units may be implemented in an electrical, mechanical, or another form.

As units described as separate components, the units may or may not be physically separate. As parts displayed as units, the parts may or may not be physical units, that is, the parts may be located in one place, or may be distributed on a plurality of network units. Some or all of the units may be selected according to actual needs to implement the objectives of the solutions in the embodiments.

Additionally, in various embodiments of this application, the functional units in each embodiment may be integrated into one processing unit. Alternatively, each unit may exist physically as a separate unit. Furthermore, two or more units may be integrated into one unit. The integrated unit may be implemented in a form of hardware, or may be implemented in a form of a software function unit.

If the integrated unit is implemented in the form of a software function unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of a software product. The computer software product is stored in a storage medium and includes several instructions for instructing a computer device (which may be a personal computer, a server, or a network device, or the like) to perform all or a part of the steps of the methods described in various embodiments of this application. The foregoing storage medium includes: a USB flash drive, a removable hard disk, a read-only memory (read-only memory, ROM), a random access memory (random access memory, RAM), a magnetic disk, an optical disc, or any other medium that can store program code.

## Claims

1. A method for establishing a communication connection, comprising:
a preset access and mobility management function device obtains a radio capability of a preset terminal and a first radio capability of the preset terminal, wherein the first radio capability of the preset terminal is a subset of the radio capability of the preset terminal and the preset terminal is connected to the preset access and mobility management function device via a first access network device; and
the preset access and mobility management function device obtains an operation mode information of the preset terminal, wherein the operation mode information of the preset terminal indicates the number of access network devices that the preset terminal is connected to; and
the preset access and mobility management function device sends the radio capability of the preset terminal or the first radio capability of the preset terminal to the first access network device based on the operation mode information of the preset terminal, so that the first access network device performs air interface configuration with the preset terminal based on the first radio capability of the preset terminal or the radio capability of the preset terminal.

2. The method according to claim 1, wherein the preset access and mobility management function device sends the radio capability of the preset terminal or the first radio capability of the preset terminal to the first access network device based on the operation mode information of the preset terminal comprises:
when the operation mode information indicates that the preset terminal is connected to two access network devices, the preset access and mobility management function device sends the first radio capability of the preset terminal to the first access network device based on the operation mode information;
when the operation mode information indicates that the preset terminal is connected to one access network device, the preset access and mobility management function device sends the radio capability of the preset terminal to the first access network device based on the operation mode information.

3. The method according to claim 1 or 2, wherein the operation mode information comprises single connectivity mode information or dual connectivity mode information, the single connectivity mode information indicates that the preset terminal is connected to one access network device, the dual connectivity mode information indicates that the preset terminal is connected to two access network devices, and the preset access and mobility management function device obtains the operation mode information of the preset terminal comprises:
the preset access and mobility management function device obtains the single connectivity mode information or the dual connectivity mode information sent by the preset terminal.

4. The method according to any one of claims 1 to 3, wherein the first radio capability of the preset terminal is a radio capability set generated by a first device based on the radio capability of the preset terminal, and the first device is the preset access and mobility management function device, the preset terminal, or the first access network device.

5. The method according to claim 1 or 2, wherein the method further comprises:
the preset access and mobility management function device obtains a second radio capability of the preset terminal, wherein the second radio capability of the preset terminal is a subset of the radio capability of the preset terminal, and the preset terminal is connected to the preset access and mobility management function device via a second access network device; and
when the operation mode information of the preset terminal indicates that the preset terminal is connected to two access network devices, the preset access and mobility management function device further sends the second radio capability of the preset terminal to the second access network device, so that the second access network device performs air interface configuration with the preset terminal based on the second radio capability of the preset terminal.

6. The method according to claim 1 or 2, wherein the preset access and mobility management function device obtains the operation mode information of the preset terminal comprises:
when the preset terminal is connected to the preset access and mobility management function device via the first access network device and the second access network device respectively, the preset access and mobility management function device generates the operation mode information of the preset terminal, wherein the operation mode information of the preset terminal indicates that the preset terminal is connected to two access network devices.

7. The method according to any one of claims 1 to 6, wherein the first radio capability of the preset terminal is a radio capability used when the preset terminal is connected to an access network device of a first radio access technology type, and the access network device type of the first access network device is the first access network device type.

8. The method according to claim 5, wherein the second radio capability of the preset terminal is a radio capability used when the preset terminal is connected to an access network device of a second access network device type, and the access network device type of the second access network device is the second access network device type.

9. A method for establishing a communication connection, comprising:
a preset terminal generates a first radio capability of the preset terminal and a second radio capability of the preset terminal, wherein the first radio capability of the preset terminal is a subset of the radio capability of the preset terminal, and the second radio capability of the preset terminal is a subset of the radio capability of the preset terminal; and
the preset terminal processes the first radio capability of the preset terminal and the second radio capability of the preset terminal, so that the preset terminal is connected to a first access network device, and when the preset terminal is connected to a second access network device, the first access network device performs air interface configuration with the preset terminal based on the first radio capability of the preset terminal, and the second access network device performs air interface configuration with the preset terminal based on the second radio capability of the preset terminal.

10. The method according to claim 9, wherein the method further comprises:
the preset terminal obtains the radio capability of the preset terminal, the radio capability of the first access network device, and the radio capability of the access network device; and
the preset terminal generates the first radio capability of the preset terminal and the second radio capability of the preset terminal, comprises:
the preset terminal generates the first radio capability of the preset terminal and the second radio capability of the preset terminal based on the radio capability of the preset terminal, the radio capability of the first access network device, and the radio capability of the second access network device.

11. The method according to claim 9 or 10, wherein the preset terminal processes the first radio capability of the preset terminal and the second radio capability of the preset terminal comprises:
the preset terminal sends the first radio capability of the preset terminal to a first access and mobility management function device, wherein the first access and mobility management function device is responsible for access management of the preset terminal; and
the preset terminal sends the second radio capability of the preset terminal to a second access and mobility management function device, wherein the second access and mobility management function device is responsible for access management of the preset terminal.

12. The method according to claim 9 or 10, wherein the preset terminal processes the first radio capability of the preset terminal and the second radio capability of the preset terminal comprises:
the preset terminal sends the first radio capability of the preset terminal and the second radio capability of the preset terminal to a preset access and mobility management function device, wherein the preset access and mobility management function device is responsible for access management of the preset terminal.

13. The method according to claim 9 or 10, wherein the method further comprises:
the preset terminal sends single connectivity mode information or dual connectivity mode information to a preset access and mobility management function device, wherein the single connectivity mode information indicates that the preset terminal is connected to one access network device, and the dual connectivity mode information indicates that the preset terminal is connected to two access network devices.

14. The method according to any one of claims 9 to 13, wherein the first radio capability of the preset terminal is a radio capability used when the preset terminal is connected to an access network device of a first radio access technology type, and the second radio capability of the preset terminal is a radio capability used when the preset terminal is connected to an access network device of a second access network device type.

15. A method for establishing a communication connection, comprising:
a first access network device generates a first radio capability of a preset terminal and a second radio capability of the preset terminal, wherein the first radio capability of the preset terminal is a subset of the radio capability of the preset terminal, and the second radio capability of the preset terminal is a subset of the radio capability of the preset terminal; and
the first access network device processes the first radio capability of the preset terminal and the second radio capability of the preset terminal, so that the preset terminal is connected to the first access network device; and
when the preset terminal is connected to the second access network device, the first access network device performs air interface configuration with the preset terminal based on the first radio capability of the preset terminal, and the second access network device performs air interface configuration with the preset terminal based on the second radio capability of the preset terminal.

16. The method according to claim 15, wherein the method further comprises:
the first access network device obtains the radio capability of the preset terminal, the radio capability of the first access network device, and the radio capability of the second access network device; and
the first access network device generates the first radio capability of the preset terminal and the second radio capability of the preset terminal, comprising:
the first access network device generates the first radio capability of the preset terminal and the second radio capability of the preset terminal based on the radio capability of the preset terminal, the radio capability of the first access network device, and the radio capability of the second access network device.

17. The method according to claim 15 or 16, wherein the first access network device processes the first radio capability of the preset terminal and the second radio capability of the preset terminal comprises:
the first access network device performs air interface configuration with the preset terminal based on the first radio capability of the preset terminal; and
the first access network device sends the second radio capability of the preset terminal to the second access network device, so that the second access network device performs air interface configuration with the preset terminal based on the second radio capability of the preset terminal.

18. The method according to any one of claims 15 to 17, wherein the first radio capability of the preset terminal is a radio capability used when the preset terminal is connected to an access network device of a first radio access technology type, and the second radio capability of the preset terminal is a radio capability used when the preset terminal is connected to an access network device of a second access network device type.

19. A communication connection apparatus, comprising:
an obtaining unit, configured to obtain a radio capability of a preset terminal and a first radio capability of the preset terminal, wherein the first radio capability of the preset terminal is a subset of the radio capability of the preset terminal, the preset terminal is connected to the preset access and mobility management function device via a first radio access network access network device, and the obtaining unit is further configured to obtain operation mode information of the preset terminal, wherein the operation mode information of the preset terminal indicates the numner of access network devices that the preset terminal is connected to; and
a sending unit, configured to send the radio capability of the preset terminal or the first radio capability of the preset terminal to the first access network device according to the operation mode information of the preset terminal, so that the first access network device performs air interface configuration with the preset terminal based on the first radio capability of the preset terminal or the radio capability of the preset terminal.

20. A communication connection apparatus, comprising:
a generation unit, configured to generate a first radio capability of a preset terminal and a second radio capability of the preset terminal, wherein the first radio capability of the preset terminal is a subset of the radio capability of the preset terminal, and the second radio capability of the preset terminal is a subset of the radio capability of the preset terminal; and
a processing unit, configured to process the first radio capability of the preset terminal and the second radio capability of the preset terminal, so that the preset terminal is connected to a first access network device, and when the preset terminal is connected to a second access network device, the first access network device performs air interface configuration with the preset terminal based on the first radio capability of the preset terminal, and the second access network device performs air interface configuration with the preset terminal based on the second radio capability of the preset terminal.

21. A communication connection apparatus, comprising:
a generation unit, configured to generate a first radio capability of a preset terminal and a second radio capability of the preset terminal, wherein the first radio capability of the preset terminal is a subset of the radio capability of the preset terminal, and the second radio capability of the preset terminal is a subset of the radio capability of the preset terminal; and
a processing unit, configured to process the first radio capability of the preset terminal and the second radio capability of the preset terminal, so that the preset terminal is connected to a first access network device, and when the preset terminal is connected to a second access network device, the first access network device performs air interface configuration with the preset terminal based on the first radio capability of the preset terminal, and the second access network device performs air interface configuration with the preset terminal based on the second radio capability of the preset terminal.

22. A communication apparatus, comprising a processor, wherein the processor is coupled to a memory, the memory is configured to store a program or instructions, and when the program or the instructions are executed by the processor, the apparatus is enabled to perform the method according to any one of claims 1 to 8.

23. A communication apparatus, comprising a processor, wherein the processor is coupled to a memory, the memory is configured to store a program or instructions, and when the program or the instructions are executed by the processor, the apparatus is enabled to perform the method according to any one of claims 9 to 14.

24. A communication apparatus, comprising a processor, wherein the processor is coupled to a memory, the memory is configured to store a program or instructions, and when the program or the instructions are executed by the processor, the apparatus is enabled to perform the method according to any one of claims 15 to 18.
